# EUROPÄISCHE PATENTSCHRIFT

(11) **EP 0 293 516 B1**
(45) Veröffentlichungstag und Bekanntmachung des Hinweises auf die Patenterteilung: **03.03.1993**
(21) Anmeldenummer: 87118533.6
(22) Anmeldetag: 15.12.1987
(51) Int. Cl.: B65G 21/08, B65G 21/00, B65G 43/00

(54) **Vorrichtung zur Sicherung von fördermittelein- oder -auslaufseitigen Öffnungen bei Bandförderern**
Device for securing input and output side openings of band conveyors
Dispositif pour assurer des espaces libres sur le côté entrée ou sortie du moyen de transport sur des convoyeurs à bande

(30) Priorität: 05.06.1987 DE 3718810
(43) Veröffentlichungstag der Anmeldung: 07.12.1988
(73) Patentinhaber: Geppert, Helmut, Dipl.-Ing., 52382 Niederzier-Krauthausen (DE)
(72) Erfinder: Geppert, Helmut, Dipl.-Ing., 52382 Niederzier-Krauthausen (DE)
(74) Vertreter: Liermann, Manfred

(56) Entgegenhaltungen:
- EP-A- 0 156 207
- DE-A- 2 620 671
- FR-A- 1 532 602
- GB-A- 2 104 026

## Beschreibung

Die Erfindung betrifft eine Vorrichtung zur Sicherung von fördermittelein- oder -auslaufseitigen Öffnungen zwischen dem tragrahmennahen Umfangsbereich einer Umlenk- bzw. Aufgabe- oder Abgabewalze oder -rolle oder Führungs- und/oder Andrückwalze oder -rolle für das Fördermittel eines Bandförderers, der vorzugsweise in Ein- oder Mehrbänder- oder -riemenbauart oder als Platten- oder Scharnierbandförderer ausgeführt ist, und dem walzen- bzw. rollennahen Stirnende des Tragrahmens desselben und/oder einem Tragstück der Lagerungseinrichtung für diese Walze(n) bzw. Rolle(n) gegen Unfallgefahren durch unbeabsichtigten oder unbefugten Eingriff in eine solche Öffnung mittels eines sich den zugriffsgefährdeten Zwischenraum zwischen dem Umfangsbereich von Walze bzw. tragrahmennaher Rolle und walzen- bzw. rollennaher Ablaufkante des Tragrahmens für das Fördermittel oder dessen walzen- bzw. rollennaher Stirnfläche von der Tragrahmenseite her in Richtung der zur fördergutseitigen Oberfläche des Fördermittels normalen Mittellängsebene des Bandförderers überbrückend zumindest bis über die zugeordnete Seitenkante des Ober- und/oder des Untertrums des Fördermittels erstreckenden tragstückfesten Abdeckgliedes (Siehe z.B. EP-A-0.156.207).

Es ist eine bekannte Tatsache, daß solche Öffnungen bei Bandförderern eine gefürchtete Gefahrenquelle dafür darstellen, daß Finger oder Teile von Kleidungsstücken während des Förderbetriebes in sie gelangen und zwischen dem Fördermittel und der betreffenden Walze bzw. Rolle eingezogen werden könnten, was erfahrungsgemäß zu schwerwiegenden Unfällen führen kann, von denen Quetschungen der Gliedmaßen noch als von geringerer Schwere anzusprechen sind. Außerdem bieten solche Öffnungen, die bei in einer Ebene arbeitenden Förderern sowohl im Bereich der Fördergutaufgabestation als auch der Fördergutabgabestation vorhanden sind, und zwar ungeachtet dessen, ob der Antrieb über den Aufgabewalzen- bzw. -rollensatz oder aber den Abgabewalzen- bzw. -rollensatz oder aber über einen zwischen beiden angeordneten separaten Antriebswalzen- bzw. -rollensatz erfolgt, und bei Knickbandförderern zusätzlich zu diesen Stellen auch noch in den Bereichen fördermittelanlaufseitig und -ablaufseitig vom Umlenkwalzen-bzw. -rollensatz bzw. vom Niederhaltewalzen- bzw. -rollensatz, und zwar in allen Fällen sowohl im Bereich des Obertrums als auch des Untertrums des Fördermittels, unerwünschte Möglichkeiten für das Einfallen bzw. Einbringen von Schmutz oder Fremdkörpern in das Innere des Tragrahmens des Bandförderers, wo hierdurch die Gefahr von Betriebsstörungen und/oder von Beeinträchtigungen der Hygiene bedingt wird und entsprechende Wartungs- bzw. Reinigungsmaßnahmen mit den entsprechenden gefürchteten Betriebstotzeiten bereits nach verhältnismäßig kurzen Betriebsintervallen erforderlich werden. Um hier Abhilfe zu schaffen, hat man für die zugriffsgefährdeten Öffnungen bereits Abdeckglieder vorgesehen, die sich von der Tragrahmenseite her in Richtung der zur fördergutseitigen Oberfläche des Fördermittels normalen Mittellängsebene des Bandförderers den zugriffsgefährdeten Zwischenraum zwischen dem Umfangsbereich der betreffenden Walze bzw. tragrahmennahen Rolle und der walzen- bzw. rollennahen Ablaufkante des Tragrahmens zumindest bis über die zugeordnete Seitenkante des Ober- und/oder des Untertrums des Fördermittels erstrekken. Dabei sind diese Abdeckglieder entweder am Tragrahmen, insbesondere an einem seitlichen Längsholm desselben, oder aber an einem Tragstück der Lagerungseinrichtung für die betreffende Walze bzw. Rolle bzw. ggf. einen ganzen Walzen-bzw. Rollensatz gehalten.

Diese bekannte Ausführung einer Zugriffssicherung zu zugriffsgefährdeten Öffnungen beschriebener Art hat einige je nach Ausführung des Bandförderers sogar recht gravierende Unannehmlichkeiten erkennen lassen.

Bei Bandförderern beschriebener Bauart wird häufig die Möglichkeit der Gutförderung in beiden Richtungen verlangt, so daß solche Bandförderer für Gutförderung im Vorlauf und im Rücklauf des fördernden Trums des Fördermittels, wie beispielsweise eines Förderbandes, auszulegen sind. Hierfür aber ist dann auch eine Zugriffssicherung sowohl auf der Obertrum- als auch auf der Unterumseite als Vorlauf- und Rücklaufsicherung erwünscht. Grundsätzlich brauchen die hierfür herkömmlich zur Verwendung kommenden Blechbiegewinkel keinen besonders großen Verformungswiderstand aufzuweisen, da ihre Funktion im wesentlichen in der Abdeckung der zugriffsgefährdeten Öffnungen besteht.

Kommen, wie es gleichfalls bereits bekannt ist, Abschnitte handelsüblicher Winkelprofile zur Verwendung, so bringen diese zwar stets einen ausreichenden Verformungswiderstand mit sich, dafür aber auch ein aufgabengemäß nicht erforderliches hohes Metergewicht. Auch sind tragstückfeste Schleppfahnen bekannt, die sich die zugriffsgefährdete Öffnung zum Tragrahmeninneren hin abdeckend an einem tragrahmenfesten Querholm od. dgl. abstützen.

Mit Ausnahme von Ausführungen mit Abdeckgliedern aus handelsüblichem Profilstahlmaterial sind die entsprechenden Bauteile solcher Bandförderer mit Blechflügelausführung der Abdeckglieder für die genannten zugriffsgefährdeten Öffnungen hinsichtlich Verformungen bei Lagerung und ggf. Transport zum Einsatzort gefährdet und bedingen erfahrungsgemäß häufig unerwünschtes Nachbiegen dieser Abdeckglieder und arbeits- und zeitaufwendige Justage bei der Montage am Einsatzort. Diese gestalten sich erfahrungsgemäß umso schwieriger, wenn sowohl fördertrumseitig als auch rücklauftrumseitig ein solches Abdeckglied anzubringen ist.

Schwierigkeiten dieser Art pflegen bei gleichfalls bekannten Tragstücken, bei denen dem einen oder beiden Trum(s) des Fördermittels zugeordnet ein bzw. je ein Abdeckglied angeformt ist, nicht auf. Hier aber kommen sich im übrigen auch bei den vorstehend beschriebenen bekannten Ausführungen zeigende Unzulänglichkeiten besonders zum Tragen.

Grundsätzlich wird bei modernen Ausführungen von Bandförderern, bei denen die Tragstücke der Lagerungseinrichtung für die Umlenk- bzw. Aufgabe- oder Abgabewalze oder -rolle für das Fördermittel in einer entsprechenden stirnseitigen Aufnahme eines Längsholmprofils des Tragrahmens verschiebbar geführt ist, die Stützbreite gerade dieses Längsholmprofils durch die Stärke des Tragstückes bestimmt. Die Stärke der zur Verwendung kommenden Tragstücke bestimmt also mittelbar nicht unwesentlich den Gestehungspreis des gesamten Bandförderers, indem ein wesentliches gewichtsbestimmendes Bauteil desselben, nämlich das Paar der Tragrahmen-Längsholme, mit entsprechender Maulweite ihres Profilquerschnittes auszuführen sind. Im Interesse verbesserter Leichtbauweise ist hier erfahrungsgemäß kaum brauchbare Abhilfe durch Verringerung der Wandstärke des Rahmenlängsholmprofils zu schaffen. Vielmehr wäre hier eine Gewichtsverringerung durch Änderung des Rahmenlängsholmprofils im Sinne einer Verkürzung seiner Seitenstege möglich, sofern die Voraussetzung hierfür durch entsprechende Verringerung der Stärke des zugeordneten Tragstückes der Lagerungseinrichtung für die Umlenk- bzw. Aufgabe- oder Abgabewalze oder -rolle geschaffen werden könnte.

Tragstücke, die in beschriebener Art in stirnseitig offenen Schiebeführungen der Rahmenlängsholmprofile verschiebbar geführt gehaltert sind, haben unabhängig davon, ob sie als nachträglich spanend bearbeitetes Schwießbrenn-Trennteil oder Stanzteil oder aber als Gußteil gefertigt sind, gewöhnlich ihre spannungsmäßig höchstbelastete Zone in dem Bereich, der sich frei über die Stirnfläche bzw. -kante des Rahmenlängsholmprofils auskragend an den vom Rahmenlängsholmprofil umschlossenen Schwanzbereich anschließt. Gerade in diesem Bereich aber ist das Abdeckglied erforderlich, sofern dieses tragstückfest vorgesehen wird. Wird ein solches Abdeckglied lösbar am Tragstück festgelegt, so wird gerade dieser Tragstückquerschnitt durch die erforderlichen Befestigungsmittel materialmäßig geschwächt. Wird das Abdeckglied hingegen angeschweißt, so muß zur Vermeidung eines unerwünschten Verziehens des Tragstückes aus seiner Ebene dieses eine bestimmte Mindeststärke aufweisen. Diese wiederum hat die bereits beschriebene unerwünschte Verbreiterung des Rahmenlängsholmsprofils mit resultierender Gewichtserhöhung zur Folge.

Bei Tragstücken in Gußausführung mit angeformtem Abdeckglied pflegen sich Schwierigkeiten hinsichtlich der Entformbarkeit des Gießlings zu ergeben, die zu Ausschuß führen oder zumindest spanende Nacharbeit erfordern. Wider Erwarten pflegen auch solche am Tragstück der Lagerungseinrichtung angeformten Abdeckglieder wegen der aufgrund der im Betrieb angreifenden bzw. aufzunehmenden und zu übertragenden Kräfte auftretenden inneren Spannungen praktisch nicht wesentlich zur Verringerung derselben beizutragen. Selbst wenn ein solches Tragstück als Gußformteil mit ober- und untertrumseitigem Abdeckglied ausgebildet wird, ergibt sich erfahrungsgemäß außer einer wesentlichen Vergrößerung der Schwierigkeiten hinsichtlich der Entformbarkeit des Gießlings praktisch keine eine Verringerung der Materialstärke des Tragstückes gestattende Ermäßigung der Belastungsspannungen in diesem Bereich, vielmehr sind je nach Art der Abkühlung des heißen Gießlings zusätzliche innere Vorspannungen zu erwarten.

Der Erfindung liegt somit die Aufgabe zugrunde, eine Möglichkeit zu schaffen, mit einfachen und kostengünstigen Mitteln bei Bandförderern gattungsgemäßer Ausführung unter Vermeidung der Nachteile herkömmlicher Sicherungen von zugriffsgefährdeten Öffnungen beschriebener Art ungeachtet der Ausführung der Tragstücke der Lagerungseinrichtung für die Umlenk- bzw. Aufgabe- oder Abgabewalze oder -rolle für das Fördermittel eine gemeinsame Vorlauf- und Rücklaufsicherung solcher zugriffsgefährdeter Öffnungen gegen unerwünschten oder unbefugten Eingriff oder Einfall von Schmutz oder Fremdkörpern verwirklichen zu können, bei der neben Gewährleistung gesteigerter Sicherheit gegen Verformungen bzw. Beschädigungen bei Lagerung und gegebenenfalls Transport zum Einsatzort und Einsparung von Arbeits- und Zeitaufwand bei Vorfertigung des Abdeckgliedes und insbesondere bei dessen Montage und Justierung am Tragstück bei Ausschluß zusätzlicher herstellungsartbedingter innerer Vorspannungen eine praktische Steigerung des Widerstandsmomentes des jeweiligen abdeckgliedtragenden Tragstückes gegen Verformungen und damit entsprechende Verringerung der im Betrieb auftretenden Materialspannungen ermöglicht wird, insgesamt also eine trotz Möglichkeit für Verringerung der Materialstärke des Tragstückes verbesserte Steifigkeit desselben erbracht wird, die einer Verbesserung der Leichtbaumöglichkeiten der gesamten Tragrahmenkonstruktion zugute kommt, wobei im Falle von Gußausführung der Tragstücke mit angeformten Abdeckgliedern gleichzeitig auch noch die Entformbarkeit solcher Gießlinge verbessert und auch hierdurch der insgesamt angestrebten Senkung des Gestehungspreises eines solchen Bandförderers im Wege nicht zuletzt der Vereinfachung der Vorfertigung und Montage der Einzelteile desselben gedient werden können soll.

Erreicht wird dies in überraschend einfacher und wirtschaftlicher Weise durch die in Anspruch 1 definierten Merkmale.

Dabei kann nach einem die Erfindung weiterbildenden untergeordneten Erfindungsgedanken für Bandförderer in Geradfördererbauart das Abdeckglied als zumindest den tragrahmennahen Bereich der Walze bzw. der Rolle auf deren nicht das Fördermittel führender Seite von lediglich einen Bewegungs- oder Einstellspielraum für das Obertrum des Fördermittels gewährend unterhalb desselben bis lediglich einen Bewegungs- oder Einstellspielraum für das Untertrum des Fördermittels gewährend oberhalb desselben hintergreifendes Füllstück, nachfolgend auch Schürze genannt, ausgebildet sein.

Für einen Bandförderer in Knickfördererbauart mit winkelmäßig gegeneinander geneigten Längenbereichen des Fördermittels und des dieses tragenden Tragrahmens kennzeichnet sich eine bewährte Alternative dadurch, daß das Abdeckglied als zumindest den tragrahmennahen Bereich der im Knickbereich eingesetzten Umlenkwalze bzw. Umlenkrolle oder Niederhaltewalze bzw. -rolle von deren nicht das Fördermittel führender Seite her auf einem lediglich einen Bewegungs- oder Einstellspielraum für dieses gewährenden Winkelbereich bezüglich der Drehachse der zugeordneten Walze bzw. Rolle übergreifende Schürze ausgebildet ist.

Für den Fall eines Bandförderers in Knickfördererbauart mit winkelmäßig gegeneinander verstellbaren Längenbereichen des Fördermittels und des dieses tragenden Tragrahmens sieht die Erfindung vor, daß das Abdeckglied als zumindest den tragrahmennahen Bereich der im Knickbereich eingesetzten Umlenkwalze bzw. Umlenkrolle oder Niederhaltewalze bzw. -rolle von deren nicht das Fördermittel führender Seite her auf einem der Komplementärwinkel zum maximalen Knickwinkel beider Längenbereiche des Fördermittels bzw. des Tragrahmens entsprechenden Winkelbereich bezüglich der Drehachse der zugeordneten Walze bzw. Rolle übergreifende Schürze ausgebildet ist. Ersichtlich wird hierbei die zugriffsgefährdete Öffnung jeweils lediglich durch eine am einlauf- oder am ablauftrumseitigen Tragstück der Lagerungseinrichtung für die betreffende im Knickbereich eingesetzte Walze bzw. Rolle gesichert.

Besonders bewährt hat sich jedoch eine Alternative hierzu, gemäß derer bei Bandförderern in Knickfördererbauart mit winkelmäßig gegeneinander verstellbaren Längenbereichen des Fördermittels und des dieses tragenden Tragrahmens das fördermittelauslauf- und das fördermitteleinlaufseitige Tragstück der Lagerungseinrichtung für die im Knickbereich eingesetzte Umlenkwalze bzw. Umlenkrolle oder Niederhaltewalze bzw. -rolle je ein Abdeckglied in Form einer zumindest den tragrahmennahen Bereich dieser Walze bzw. Rolle von deren nicht das Fördermittel führender Seite herübergreifenden Teilschürze aufweist, wobei beide Teilschürzen in Achsrichtung der zugeordneten Walze bzw. Rolle versetzt zueinander angeordnet sind und eine in ihrer Summe mindestens dem Komplementärwinkel zum maximalen Knickwinkel beider Längenbereiche des Fördermittels bzw. des Tragrahmens entsprechende Bogenlänge aufweisen. Hierdurch wird mit einfachen und erfahrungsgemäß praktisch nicht aufwendigeren Mitteln eine in jeder Knickwinkelstellung der winkelmäßig gegeneinander verstellbaren Längenbereiche des Fördermittels und des dieses tragenden Tragrahmens eine die zugeordnete zugriffsgefährdete Öffnung stets vollständig abgedeckt haltende Sicherung gewährleistet.

Sowohl aus betrieblichen als auch nicht zuletzt aus herstellungstechnischen und Lagerhaltung und Montage rationalisierenden Gründen hat es sich ferner als zu bevorzugen erwiesen, wenn bei einem Bandförderer in Knickfördererbauart mit winkelmäßig gegeneinander verstellbaren Längenbereichen des Fördermittels und des dieses tragenden Tragrahmens das fördermittelauslauf- und das fördermitteleinlaufseitige Tragstück der Lagerungseinrichtung für die im tragrahmennahen Knickbereich eingesetzte Umlenkwalze bzw. Umlenkrolle oder Niederhaltewalze bzw. -rolle je ein Abdeckglied in Form einer zumindest den tragrahmennahen Bereich dieser Walze bzw. Rolle von deren nicht das Fördermittel führender Seite her auf einem mehr als der Hälfte des Komplementärwinkels zum maximalen Knickwinkel beider Längenbereiche des Fördermittels bzw. des Tragrahmens entsprechenden Winkelbereich bezüglich der Drehachse der zugeordeten Walze bzw. Rolle übergreifenden Teilschürze aufweist, wobei beide Teilschürzen in Achsrichtung dieser Walze bzw. Rolle versetzt zueinander angeordnet sind. Ersichtlich bietet eine solche Ausgestaltung der Erfindung nämlich die Möglichkeit, für die Erstellung der gesamten entweder einem Trum des Fördermittels oder beiden Trums desselben zugeordneten Lagerungseinrichtung für die an der Knickumlenkung des Fördermittels beteiligten Walzen oder Rollen bzw. Walzen- oder Rollensätze mit lediglich einer Rechts- und einer Linksausführung der Tragstücke dieser Lagerungseinrichtung auszukommen, indem nämlich diese Tragstücke einfach und kostengünstig so ausgestaltet werden können, daß stets eine Rechtsausführung desselben dem einlaufseitigen Bereich des Fördermitteltrums zugeordnet einer gleichartigen Tragstückausführung in Zuordnung zum auslaufseitigen Trumbereich des Fördermittels auf der anderen Tragrahmenseite gegenüberliegend angeordnet wird.

Eine bewährte spezielle Ausführung einer erfindungsgemäßen Vorrichtung für einen Bandförderer in Knickfördererbauart mit winkelmäßig gegeneinander verstellbaren Längenbereichen des Fördermittels und des dieses tragenden Tragrahmens kennzeichnet sich dadurch, daß das fördermittelauslauf- und das fördermitteleinlaufseitige Tragstück der Lagerungseinrichtung für die im Knickbereich eingesetzte Umlenkwalze bzw. Umlenkrolle oder Niederhaltewalze bzw. -rolle je ein Abdeckglied in Form einer zumindest den tragrahmennahen Bereich dieser Walze bzw. Rolle von deren nicht das Fördermittel führender Seite her auf einem unter Berücksichtigung eines Bewegungs- oder Einstellspielraums für das Fördermittel mindestens 180° entsprechenden Winkelbereich übergreifenden Teilschürze aufweist, wobei beide Teilschürzen in Achsrichtung der zugeordneten Walze bzw. Rolle versetzt zueinander angeordnet sind. Hierdurch läßt sich trotz bei beliebigem betriebsbedingtem Knickwinkel stets vollständig abgedeckten zugriffsgefährdeten Öffnungen ein maximaler Knickwinkelbereich verwirklichen.

Gemäß einer zweckmäßigen Weiterbildung der Erfindung kann bei allen Bandförderern in Knickfördererbauart zumindest eine der Schürzen bzw. Teilschürzen, vorzugsweise die Schürze bzw. Teilschürze des fördermitteleinlaufseitigen Tragstückes der Lagerungseinrichtung für die im Knickbereich eingesetzt Umlenkwalze bzw. Umlenkrolle oder Niederhaltewalze bzw. -rolle, in ihrem tragrahmennahen Fußbereich eine zur Fördermittelebene geneigte Auflauframpe aufweisen. Durch diese Auflauframpe wird für den Fall, daß durch die Bewegung des betreffenden Fördermitteltrums eine Gliedmaße, ein Kleidungsstück oder ein sonstiger Fremdkörper im Bereich der zugriffsgefährdeten Öffnung zugeführt wird, dieser Fremdkörper vom Fördermitteltrum abgehoben und auf eine Bewegungsbahn geleitet, in der er praktisch nicht mehr der Mitnahmewirkung des Fördermitteltrums unterliegt.

Für den speziellen Fall, daß bei einem Bandförderer in Knickfördererbauart jeweils zwei miteinander zusammenwirkende Teilschürzen vorgesehen sein sollten, kann sich mit Vorzug die Auflauframpe über zumindest einen Teil der Breite der zugeordneten anderen Teilschürze in Achsrichtung der zugeordneten Walze bzw. Rolle erstrecken. Hierdurch wird eine besonders gute Sicherung gegenüber insbesondere Schmutzeinfall in den Wirkungsbereich der kinematischen Glieder der betreffenden Trumumlenkung des Fördermittels erbracht.

Aus Gründen gesteigerter Sicherheit insbesondere gegen unerwünschtes Eindringen von Schmutz oder Fremdkörpern, gegebenenfalls aber auch Fördergutteilchen ausreichend geringer Abmessungen, hat es sich bewährt, wenn in weiterer zweckmäßiger Fortbildung der Erfindung bei Geradfördererbauart ausgeführten Bandförderern die Schürze ober- und/oder untertrumseitig eine spannrichtungsparallele Oberfläche aufweist. Für bestimmte Bandfördererausführungen hat es sich insbesondere in den Fällen, in denen eines der Trums des Fördermittels, meist das Rücklauftrum, zwecks Änderung des Umschlingungswinkels der betreffenden es führenden Walze bzw. Rolle bzw. eines entsprechenden Walzen- oder Rollensatzes oder zur Änderung der Fördermittelspannung in seinem Anstellwinkel zur betreffenden Walze bzw. Rolle bzw. dem betreffenden Walzen- oder Rollensatz verändert werden können soll, als besonders zweckmäßig erwiesen, wenn die Schürze ober- und/oder untertrumseitig eine bezüglich der Drechachse der zugeordneten Walze bzw. Rolle divergierend geneigte Oberfläche aufweist. Andererseits können aber auch konstruktive Voraussetzungen an einem Bandförderer dieser Art vorliegen, bei denen sich empfiehlt, daß die Schürze ober- und/oder untertrumseitig eine bezüglich der Drehachse der zugeordneten Walze bzw. Rolle konvergierend geneigte Oberfläche aufweist.

Für Bandförderer in Knickförderbauart kann die Ausführung entsprechend zweckmäßig so getroffen sein, daß die Schürze bzw. zumindest eine der Teilschürzen trumseitig eine bei maximalen Knickwinkel beider Längenbereiche des Fördermittels bzw. des Tragrahmens zur Spannrichtung des zugeordneten Fördermittelbereichs parallele Oberfläche aufweist.

Ferner kann aus den gleichen Gründen wie bei einem Bandförderer in Geradfördererbauart bei einem Bandförderer in Knickfördererbauart zweckmäßig vorgesehen sein, daß die Schürze bzw. zumindest eine der Teilschürzen trumseitig eine bei maximalem Knickwinkel beider Längenbereiche des Fördermittels bzw. des Tragrahmens zur Spannrichtung des zugeordneten Fördermittelbereichs divergierend oder aber konvergierend geneigte Oberfläche aufweist.

Besonders bewährt hat sich ferner eine Ausführung der Vorrichtung nach der Erfindung, bei der die Schürze bzw. zumindest eine der Teilschürzen auf ihrer walzen- bzw. rollennahen Seite eine der Walzen- bzw. Rollenoberfläche konforme Kontur aufweist. Andererseits kann es aber auch zweckmäßig sein, wenn diese Kontur der Schürze bzw. zumindest einer der Teilschürzen auf deren walzen- bzw. rollennaher Seite von der Walzen- bzw. Rollenoberfläche abweicht. Dabei kann zweckmäßig eine solche Schürze auf ihrer walzen- bzw. rollennahen Seite eine zwischen dem obertrumnahen und dem untertrumnahen Endbereich bzw. bei Bandförderern in Knickfördererbauart dem trumnahen und dem freien Endbereich ihrer walzen- bzw. rollennahen Oberfläche einen größeren Abstand zur Walzen- bzw. Rollenoberfläche als diese Endbereiche einhaltende Kontur aufweisen.

Bei Bandförderern in Knickfördererbauart mit winkelmäßig gegeneinander verstellbaren Längenbereichen des Fördermittels und des dieses tragenden Tragrahmens und mit diesen Bereichen jeweils zugeordneten Teilschürzen der Lagerungseinrichtung können ferner zweckmäßig beide Teilschürzen auf ihrer walzen- bzw. rollennahen Seite eine zwischen dem trumnahen und dem freien Endbereich ihrer walzen- bzw. rollennahen Oberfläche einen zunehmend größeren Abstand zur Walzen- bzw. Rollenoberfläche einhaltende Kontur aufweisen. Diese beschriebenen speziellen Ausführungen dienen besonders der Erweiterung des Anstellwinkels der Achse bzw. Welle der zugeordneten Walze oder Rolle bzw. des zugeordneten Walzen- Rollensatzes bei Schrägverstellung zwecks Geradlaufausgleichs des Fördermittels relativ zur vertikalen Mittellängsebene des Förderers.

Überraschend hat sich gezeigt, daß die durch die Erfindung angestrebten vorteilhaften Wirkungen auch dann erbracht werden, wenn die Schürze bzw. Teilschürze am zugeordneten Tragstück der Lagerungseinrichtung lösbar festgelegt ist. Naturgemäß werden diese Wirkungen aber noch verbessert, wenn die Schürze bzw. Teilschürze am zugeordneten Tragstück der Lagerungseinrichtung fest angeordnet ist. Dabei kann sie zweckmäßig am zugeordneten Tragstück der Lagerungseinrichtung angeschweißt, und zwar dies beispielsweise durch Punktschweißen, oder aber angenietet oder angeklebt sein. Als besonders zu bevorzugen hat es sich jedoch erwiesen, wenn die Schürze bzw. Teilschürze am zugeordneten Tragstück der Lagerungseinrichtung angeformt, beispielsweise angegossen ist.

Für bestimmte Einsatzfälle hat es sich ferner als besonders zweckmäßig erwiesen, wenn bei Bandförderern mit zwischen zwei Trums des Fördermittels gelegener Schürze oder gelegenen Teilschürzen der Lagerungseinrichtung, und zwar dies sowohl bei Geradbandförderern als auch bei Knickbandförderern, die Schürze bzw. Teilschürze sich über den freien Zwischenraum zwischen beiden einander entsprechenden, auf unterschiedlichen Tragrahmenseiten angeordneten Tragstücken der Lagerungseinrichtung erstreckt. Hierdurch läßt sich auch bei besonders dünnwandiger Ausführung der einander entsprechenden, auf gegenüberliegenden Seiten des Tragrahmens befindlichen Tragstücke ein ausreichend starrer und damit biege- und verwindungssteifer Verbund erzielen, der in jeder Hinsicht extrem dünnwandige Tragstückausführungen ohne Verlust an Verformungssicherheit und damit auch eine erwünschte Reduzierung der breitenmäßigen Profilauslage der Längsholmprofile des Tragrahmens zuläßt.

Zur Erleichterung der Montage und Justierung kann gemäß einer anderen zweckmäßigen Weiterbildung die der Schürze bzw. Teilschürze zugeordnete Walzen- oder Rollenachse oder -welle im zugeordneten Tragstück bzw. in den zugeordneten Tragstücken der Lagerungseinrichtung relativ zur Schürze bzw. Teilschürze verstellbar gehalten sein. Dabei kann mit Vorzug das die Schürze bzw. Teilschürze aufweisende Tragstück der Lagerungseinrichtung mindestens ein Langloch aufweisen, in dem die zugeordnete Walzen- oder Rollenachse oder -welle mittels einer Lagerhalterung verschiebbar gehalten ist. Eine eine besondere Universalität der Einstellmöglichkeit der Schürze bzw. Teilschürze relativ zur zugeordneten Walze oder Rolle bzw. zum zugeordneten Walzen- bzw. Rollensatz gewährleistende Ausführung, die bei Bandförderern in Knickfördererbauart mit winkelmäßig gegeneinander verstellbaren Längenbereichen des Fördermittels und des dieses tragenden Tragrahmens und mit diesen Bereichen jeweils zugeordneten Teilschürzen der Lagerungseinrichtung zum Einsatz kommt, kennzeichnet sich dadurch, daß die die Teilschürzen aufweisenden Tragstücke der Lagerungseinrichtung jeweils mindestens ein vorzugsweise in Richtung des einlaufenden und/oder in Richtung des auslaufenden Trums des Fördermittels ausgerichtetes Langloch aufweisen,wobei das Langloch bzw. mindestens eines der Langlöcher des einen Tragstückes das Langloch bzw. mindestens eines der Langlöcher des anderen Tragstückes zumindest teilweise überdeckt und die zugeordnete Walzen-oder Rollenachse oder -welle mittels einer die sich überdeckenden Langlöcher beider Tragstücke gemeinsam durchgreifenden Lagerhalterung verschiebbar gehalten ist. Beide letztgenannten Ausführungen der Erfindung ermöglichen neben einer Anstellanpassung der Zuordnung von Walze oder Rolle bzw. Walzen- oder Rollensatz zur zugeordneten Schürze bzw. Teilschürze der Lagerungseinrichtung für diese(n) auch eine gegebenenfalls erwünschte Schrägjustierung der Walze(n) bzw. Rolle(n) relativ zur vertikalen Mittellängsebene des Förderers zwecks Beeinflussung des Geradlaufs des Fördermittels.

Es ist ersichtlich, daß die Erfindung nicht nur die Biege-und Verwindungssteifigkeit von mit Abdeckgliedern versehenen Tragstücken von Lagerungseinrichtungen für Walzen oder Rollen bzw. Walzen- oder Rollensätze eingangs beschreibener Art gerade in deren belastungsmäßig besonders gefährdeten Bereichen insbesondere kurz außerhalb der Führung derselben in der freien Profilöffnung des zugeordneten Tragrahmen-Längsholms verbessert, sondern auch für eine vorgegebene Belastung Ausführungen solcher Tragstücke mit geringerer Wandstärke zuläßt und dadurch wesentliche Gewichtseinsparungen über der gesamten Fördererlänge durch Reduzierung der seitlichen Ausladung der zugeordneten Tragrahmen-Längsholmprofile ermöglicht, wobei stets eine zuverlässige gemeinsame Vorlauf- und Rücklaufsicherung gegen unbefugten oder unbeabsichtigten Eingriff oder Einfall von Schmutz oder Fremdkörpern gewährleistet ist. Die erwünschte Folge hiervon ist eine Verbesserung der Handhabbarkeit der einzelnen Bauteile eines Bandförderers gattungsgemäßer Art und nicht unerhebliche Einsparungen von Arbeits- und Zeitaufwand bei Vorfertigung der Abdeckglieder und deren Montage und Justierung am Tragstück der Lagerungseinrichtung, wobei sogar bei Blechflügelausführung der Abdeckglieder solcher Tragstücke durch die erhöhte Sicherheit gegenüber Verformungen und Beschädigungen derselben bei Lagerung und ggf. Transport zum Einsatzort auch hier eine weitestgehende Ausschaltung unerwünschter Nachverformung und Justage und daraus resultierend eine Einsparung von Arbeits- und Zeitaufwand möglich wird. Bei Ausführung der Tragstücke als Gießlinge mit jeweils angeformtem Abdeckglied in Form einer angegossenen Schürze bzw. Teilschürze ist zudem auch noch ersichtlicht die Entformbarkeit verbessert, wobei dies insbesondere für solche Ausführungen gilt, bei denen die Schürze bzw. Teilschürze des betreffenden Tragstückes auf ihrer walzen- bzw. rollennahen Seite eine von der Walzen- bzw. Rollenoberfläche abweichende Kontur aufweist, die sich im übrigen in Achsrichtung der betreffenden Walzen- bzw. Rollenachse bzw. -welle zunehmend von der Walzen- bzw. Rollenoberfläche konturenmäßig entfernen kann. Insgesamt wird durch die Erfindung aufgabengemäß eine vorteilhafte Rationalisierung der Fertigung und Montage eines Bandförderers gattungsgemäßer Art im Verein mit einer nicht unbeträchtlichen Senkung des Gestehungspreises desselben ermöglicht.

Im folgenden wird die Erfindung anhand einiger bevorzugter Ausführungsbeispiele, die in den Zeichnungen schematisch dargestellt sind, rein beispielsweise näher erläutert. Dabei zeigen:
- Fig. 1: eine Seitenansicht des umlenkwalzenseitigen Teilbereichs eines Tragstückes der Lagerungseinrichtung für eine Umlenkwalze eines Bandförderers aus Richtung A gemäß Fig. 2 ohne Darstellung von das insoweit weggebrochene Ende des Tragstückes überdeckenden Bereichen des Tragrahmens,
- Fig. 2: eine Draufsicht aus Richtung E gemäß Fig. 1 auf einen den Tragstückbereich gemäß Fig. 1 enthaltenden Bereich eines Bandförderers,
- Fig. 3: in schaubildlicher Darstellung verkleinerten Maßstabes eine Seite eines Knickbeschlages des Tragrahmens eines in Knickbandförderer-Bauart ausgeführten Bandförderers, und
- Fig. 4: in der Darstellung gemäß Fig. 1 entsprechender Darstellung einen Teilschnitt längs Linie IV-IV gemäß Fig. 3.

Dabei sind einander entsprechende Einzelteile jeweils mit gleichen Bezugszeichen gekennzeichnet.

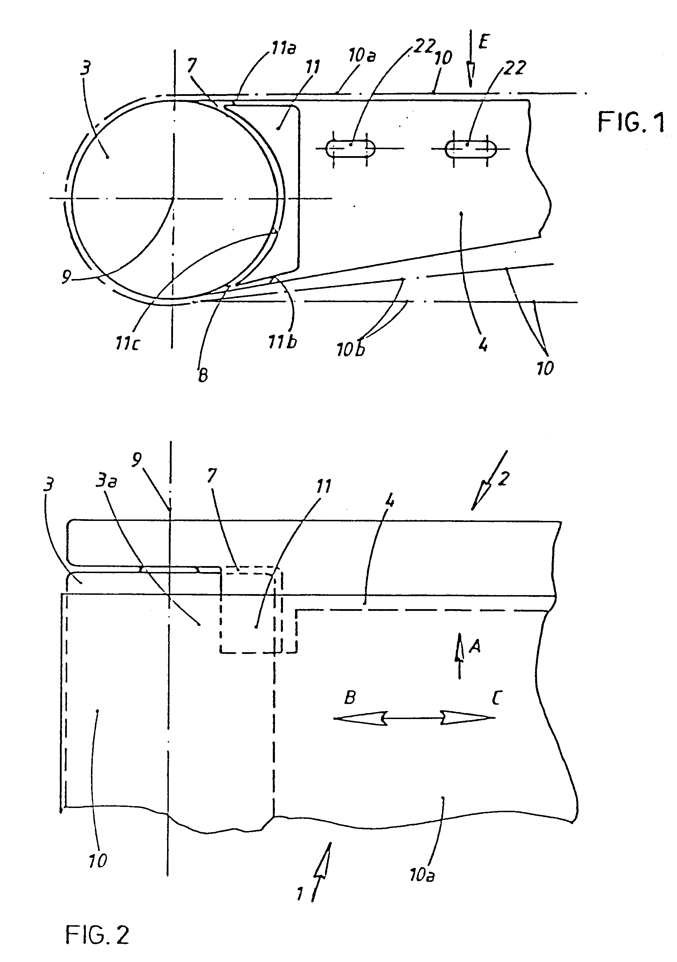

Der als Ganzes mit 1 bezeichnete Bandförderer weist einen in Fig. 2 mit 2 bezeichneten Tragrahmen auf, der aus einem oder mehreren in Tragrahmenlängsrichtung hintereinander angeordneten und miteinander verbundenen sich paarweise gegenüberliegenden Längsholmen und beidseitig jeweils einem Paar von Tragstücken 4 von Lagerungseinrichtungen für jeweils die Achse oder Welle einer Umlenk- bzw. Aufgabe- oder Abgabewalze oder -rolle bzw. eines Satzes solcher Walzen bzw. Rollen gebildet ist, von denen eine als Umlenkwalze arbeitende Walze in Fig. 1 und 2 dargestellt und mit 3 bezeichnet ist. Der Tragrahmen 2 weist als C-Profile ausgebildete Längsholme auf, die jeweils paarweise gegenüberliegend durch Quertraversen miteinander verbunden und ausgesteift sind (nicht dargestellt). Der Tragrahmen 2 könnte aber auch in Querrichtung einstückig ausgebildet sein, indem ein eine das Obertrum 10a des Fördermittels 10 von seiner Unterseite her unterstützende Auflagefläche darbietendes C-Profilteil tragrahmenbildend mit seinem Bodensteg fördermitteltrumparallel und seinen Seitenstegen tragrahmenmittellängsebenenparallel angeordnet wird.

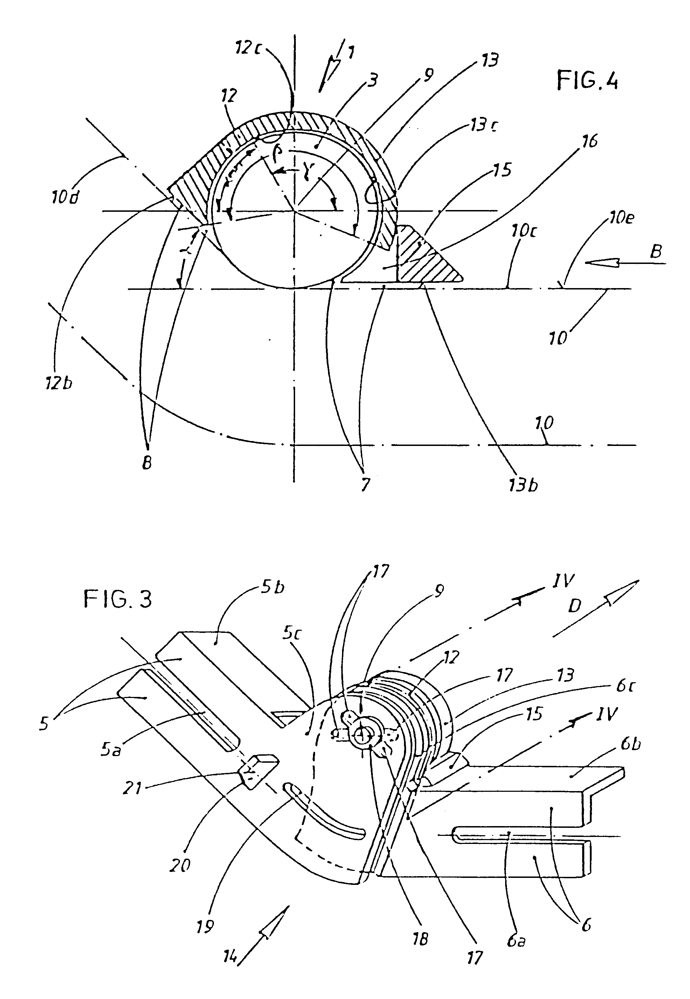

Beim dargestellten Ausführungsbeispiel sind in an sich bekannter Weise die Tragstücke 4 der Lagerungseinrichtung für beispielsweise die Umlenkwalze 3 des Bandförderers 1, von denen in Fig. 1 und 2 lediglich eines dargestellt ist, in die freien Profilöffnungen der Längsholme des Tragrahmens 2 mit ihrem der von ihnen getragenen Walze 3 abgewandten Ende eingeschoben und mittels in Festlegungsschlitze 22 derselben eingreifender Schraubelemente in Arbeitsstellung festgelegt gehalten, wobei im übrigen notwendige Justierungsarbeiten oder Nachspannmaßnahmen beispielsweise mittels sich gegenüber dem Tragrahmen 2 abstützender und in Gewindelöcher in Spannasen am zugeordneten Tragstück 4 eingreifender Schraubelemente oder aber mittels sich einerseits gegenüber dem Tragrahmen 2 und andererseits gegenüber einer Seitennase 20 (vgl. Fig. 3) am Tragstück 5 beispielsweise über ein Gewindeloch 21 abstützender Schraubelemente, wie in Fig. 3 veranschaulicht, vorgenommen werden können. Die Achse oder Welle 9, die in Fig. 1 und 2 lediglich durch ihre strichpunktierte Mittellinie dargestellt ist, ist in den Tragstücken in beliebiger, auch bekannter Weise gehaltert, die daher nicht dargestellt ist. Am Tragstück 4 ist die Walze 3 auf deren nicht das Fördermittel 10 führender, in Fig. 1 und 2 rechter Seite hintergreifend ein Abdeckglied 11 angeordnet, das in Form einer Schürze am Hauptkörper des Tragstückes 4 einstückig so angeformt ist, daß es sich von lediglich einen Bewegungs- oder Einstellspielraum für das Obertrum 10a des Fördermittels 10 gewährend unterhalb desselben bis lediglich einen Bewegungs- oder Einstellspielraum für das Untertrum 10b des Fördermittels 10 gewährend oberhalb desselben in Achsrichtung der Achse oder Welle 9 der Walze 3 erstreckt, wie in Fig. 1 und 2 dargestellt. Dabei weist die Schürze 11 auf ihrer dem Obertrum 10a des Fördermittels 10 zugewandten Seite eine spannrichtungsparallele, nämlich zum Obertrum 10a parallele Oberfläche 11a auf. Die dem Untertrum 10b des Fördermittels 10 zugewandte Seite der Schürze 11 ist mit einer Oberfläche 11b ausgestattet, die bezüglich der Drehachse 9 der zugeordneten Walze 3 divergierend geneigt ist, wie aus Fig. 1 ersichtlich. Dies hat den Zweck, eine Veränderung des Anstellwinkels des Untertrums 10b des Fördermittels 10 zur Walze 3 zu ermöglichen, wie in Fig. 1 durch zweierlei strich-punktierte Linien angedeutet, von denen die untere eine obertrumparallele Betriebseinstellung des Untertrums 10b des Fördermittels 10 und die obere eine winkelmäßig veränderte Betriebsstellung desselben symbolisiert, sofern dies beispielsweise aus Gründen der Veränderung der Vorspannung des Fördermittels 10 oder der Mitnahmekraft im Bereich der Walze 3 sich als erforderlich erweisen sollte.

Aus Fig. 2 ist ersichtlich, daß die Schürze 11 lediglich eine solche Ausdehnung in Richtung der Achse 9 der Walze 3 aufweist, daß sie den tragstücknahen Bereich 3a derselben so weit übergreift, daß sie den tragstücknahen Randbereich des Obertrums 10a des Fördermittels 10 untergreift. Das gleiche gilt, wie aus Fig. 1 ersichtlich, auch für die untertrumnahe Seite der Schürze 11. Die erwünschte Folge hiervon ist, daß - wie insbesondere aus Fig. 1 ersichtlich - die Schürze sowohl ober- als auch untertrumseitig die zugriffsgefährdeten Öffnungen 7 bzw. 8 zwischen dem tragrahmennahen Umfangsbereich der Walze 3 und dem walzen- bzw. rollennahen Stirnende des Tragrahmens 2 und/oder dem Tragstück 4 der Lagerungseinrichtung für die Walze 3 gegen Unfallgefahren durch unbeabsichtigten oder unbefugten Eingriff oder Einfall bzw. Eindringen von Schmutz oder Fremdkörpern in die obertrumseitige Öffnung 7 ebenso wie in die untertrumseitige Öffnung 8 zuverlässig sichert. Hierdurch wird eine gemeinsame Vorlauf- und Rücklaufsicherung für beide Trums 10a und 10b des Fördermittels 10 geschaffen, indem es nicht mehr auf ein Laufen des Fördermittels 10 in Richtung B (z.B. Vorlauf) oder C (z.B. Rücklauf) ankommt, vielmehr sowohl die obertrumseitige zugriffsgefährdete Öffnung 7 als auch die untertrumseitige zugriffsgefährdete Öffnung 8 jeweils als fördermittelein- oder -auslaufseitige Öffnung behandelt werden.

Aus Fig. 1 ist ferner ersichtlich, daß die Schürze 11 auf ihrer der benachbarten Oberfläche 3a der Walze 3 zugewandten Seite eine zu dieser Oberfläche 3a konform konturierte Oberfläche 11c aufweist. Die Schürze 11 kann aber auch solche Formgebung aufweisen, daß zwischen ihrem obertrumnahen und ihrem untertrumnahen Endbereich der Abstand zur Walzenoberfläche 3a größer ist als der Abstand in diesen Endbereichen. Das wird immer dann zu bevorzugen sein, wenn es auf einen möglichst großen Schräganstellungswinkel der Walzenachse 9 relativ zur in Fig. 2 wiedergegebenen Normalstellung zur vertikalen Mittellängsebene des Bandförderers 1 beispielsweise zwecks Verbesserung der Geradlaufeigenschaften des Fördermittels 10 ankommt.

Die für als Knickbandförderer ausgebildete Bandförderer bestimmte Ausführung gemäß Fig. 3 entspricht im Prinzip der gemäß Fig. 1, wobei allerdings die den die Walzen- bzw. Rollenachse oder -welle tragenden Bereichen der Lagerungstragstücke 4 gemäß Fig. 1 und 2 entsprechenden Bereiche von Außenstück 5 und Innenstück 6 des Knickbeschlages 14 gemäß Fig. 3 in üblicher Weise ausgebildet sind, indem sie eine gemeinsame Bohrung für den Durchtritt einer in herkömmlicher Weise auszuführenden Schwenkachse 9 und einen zu deren Mittelpunkt bzw. Drehachse konzentrischen Kreisbogenschlitz 19 aufweisen, durch den ein nicht dargestelltes Schraubelement in herkömmlicher Weise hindurchgreift, mittels dessen Außenstück 5 und Innenstück 6 dieses Knickbeschlages in der als Arbeitsstellung gewählten winkelmäßigen Zuordnung zueinander festgelegt werden können. Das Außenstück 5 ist ähnlich wie das Tragstück 4 gemäß Fig. 1 und 2 mit Führungsleisten und einem Festlegungsschlitz 5a zwischen diesen sowie einer sich nach außen wegerstreckenden Seitennase 20 mit einer Gewindebohrung 21 für die Aufnahme eines Schraubelementes ausgestattet, mittels dessen der gesamte Knickbeschlag gegenüber dem dem Außenstück 5 desselben zugeordneten Tragrahmenteil bzw. -profil relativ verschiebbar und in gewünschter Arbeitsstellung haltbar ist. Das Innenstück 6 des Knickbeschlages ist in ähnlicher Weise mit Führungsleisten und einem Festlegungsschlitz 6a zwischen diesen ausgerüstet und könnte gleichfalls eine sich nach außen erstrekkende Seitennase mit Gewindeloch aufweisen wie das Außenstück 5, oder aber ebenso wie letzteres sich nach unten erstreckende Nasen mit Gewindebohrungen für die Aufnahme eines Schraubelementes, das sich gegenüber beispielsweise einem tragrahmenfesten oder lose eingelegten Anschlagwinkel abstützt und eine Relativverschiebung des betreffenden Außenbzw. Innenstückes 5 bzw. 6 des Knickbeschlages bezüglich des - nicht dargestellten - Tragrahmens 2 ermöglicht. Das Innenstück 6 ist überdies - wie dargestellt - mittels eines Abkröpfsteges so ausgebildet, daß seine Führungsleisten in der gleichen Außenebene liegen wie die Führungsleisten des Außenstückes 5 des Knickbeschlages 14 bzw. die Führungsleisten von Innen- und Außenstück desselben miteinander fluchten. Dies hat den Vorteil, daß auch die Tragrahmenkonstruktion beidseitig des Knickbeschlages 14 in gleicher Weise ausgeführt sein kann.

Innenteil 6 ebenso wie Außenteil 5 des Knickbeschlages gemäß Fig. 3, von dem natürlich auf der gegenüberliegenden Tragrahmenseite ein komplementäres Gegenstück vorgesehen ist, weisen jeweils ein sich in Richtung der Tragrahmenmittellängsebene erstreckendes etwa ohrenförmiges Abdeckglied 6b bzw. 5b auf. Wenn die Führungsleisten von Außen- und Innenstück 5 bzw. 6 des Knickbeschlages 14 - wie dargestellt - in Tragrahmenlängsrichtung nicht länger sind als die Abdeckglieder 5b bzw. 6b, weisen entweder die jeweils zugeordneten Tragrahmenlängsholmprofile, sofern diese als C- oder sonstiges selbständiges Hohlprofil ausgebildet sein sollten, Führungsschlitze oder entsprechende Ausnehmungen für die Aufnahme der Abdeckglieder 5b bzw. 6b oder aber diese entsprechende Aufnahmeschlitze für das Eingreifen entsprechender Stegbereiche des zugeordneten Tragrahmenlängsholmprofils auf. Solche Schlitze in den Abdeckgliedern 5b bzw. 6b sind in Fig. 3 jedoch nicht gezeigt, da der hier dargestellte Knickbeschlag 14 eines Knickbeschlagpaares eines Knickbandförderers für Verwendung in Verbindung mit einer im Querschnitt einstückigen Tragrahmenausführung in Form eines U- oder C-Profils bestimmt ist. Im übrigen aber ist hervorzuheben, daß die Führungsleisten des Innenstückes 6 und/oder die Führungsleisten des Außenstückes 5 des Knickbeschlages 14 auch die tragrahmenseitige Stirnfläche des zugeordneten Abdeckgliedes 5b bzw. 6b überragende Länge aufweisen können.

Beim in Fig. 3 dargestellten Ausführungsbeispiel weist das Innenstück 6 des Knickbeschlages 14 einen Traglappen 6c für die Walzen- bzw. Rollenachse auf. Dieser liegt in an sich bekannter Weise innenseitig an einem entsprechenden Traglappen 5c des Außenstückes 5 des Knickbeschlages 14 an und greift in eine etwa schlitzförmige, traglappenparallele zum Innenstück 6 des Knickbeschlages 14 hin offene Öffnung ein. Die in Richtung des Pfeiles D in Fig. 3 gebildete Begrenzung dieser etwa schlitzförmigen Öffnung für die Aufnahme des Traglappens 6c wird durch eine mit dem Traglappen 5c des Außenstückes 5 des Knickbeschlages 14 auf dessen dem Innenstück 6 desselben abgewandter Seite verbundene außenstückseitige Schürze 12 erbracht. Diese wiederum greift in eine etwa schlitzförmige Öffnung des Innenstückes 6 des Knickbeschlages 14 zwischen dessen Traglappen 6c und einer diesen in Richtung des Pfeiles D begrenzenden innenstückfesten Schürze 13 ein.

Wie insbesondere aus Fig. 4 besonders deutlich wird, wirken die beiden Schürzen 12 und 13 als den fördermittelein- oder -auslaufseitigen zugriffsgefährdeten Öffnungsbereich zwischen einlaufseitigem Längenbereich 10c des Obertrums des Fördermittels 10 bzw. des auslaufseitigen Längenbereichs 10d desselben einerseits und dem hier als Niederhalterolle ausgebildeten Umlenkglied für dieses andererseits sowohl bei Vorlauf des Fördermittels 10 in Richtung des Pfeiles B, als auch bei Rücklauf in entgegengesetzter Richtung zuverlässig sichernd überdeckende Teilschürzen, von denen in Fig. 4 die außenstückseitige Teilschürze 12 im Schnitt dargestellt ist, während die innenstückfeste Teilschürze 13 verdeckt dahinter liegt und nur durch ihr in Fig. 4 links in Form einer gestrichelten Linie wiedergegebenes Ende, das nicht näher bezeichnet ist, und die gestrichelte Bezugslinie zur Bezugsziffer 13 angedeutet ist.

Weiterhin ist in Fig. 4 dargestellt, daß zumindest die außenstückfeste Teilschürze 12 eine Bogenlänge aufweisen kann, die einem Winkelbereich β entspricht, der mindestens 180° beträgt. Eine solche Ausführung ist insbesondere immer dann zu bevorzugen, wenn einem Knickbeschlag 14 lediglich eine entweder außen- oder innenstückfeste Teilschürze 12 bzw. 13 zugeordnet ist. In einem solchen Falle sollte die das Abdeckglied bildende Schürze so ausgebildet sein, daß sie zumindest den tragstücknahen Bereich der im Knickbereich eingesetzten Umlenkrolle (Niederhalterolle) von deren nicht das Fördermittel 10 führender Seite her auf einem dem Komplementärwinkel γ zum maximalen Knickwinkel αₘₐₓ beider Längenbereiche 10c, 10d des Fördermittels 10 bzw. des Tragrahmens 2 entsprechenden Winkelbereich bezüglich der Drehachse 9 der zugeordneten Niederhalterolle 3 übergreift. In Fig. 4 ist nicht der maximale Knickwinkel αₘₐₓ , sondern der der dargestellten Arbeitsstellung entsprechende Knickwinkel α wiedergegeben, dem der dargestellte Komplementärwinkel γ entspricht.

In Fällen wie dem in Fig. 3 und 4 dargestellten mit Teilschürzen 12 bzw. 13 an Außenstück 5 und Innenstück 6 des Knickbeschlages 14 sollten beide Teilschürzen 12 bzw. 13 - wie dargestellt - in Achsrichtung D der zugeordneten Niederhalterolle 3 versetzt zueinander angeordnet sein und eine in ihrer Summe mindestens dem Komplementärwinkel γ zum maximalen Knickwinkel αₘₐₓ beider Längenbereiche 10c bzw. 10d des Fördermittels 10 bzw. des Tragrahmens 2 entsprechende Bogenlänge aufweisen, wobei es sich besonders bewährt hat, wenn in spezieller Ausführung hiervon beide Teilschürzen die zugeordnete Walze bzw. Rolle, hier Niederhalterolle 3, von deren nicht das Fördermittel 10 führender Seite her auf einem mehr als der Hälfte des Komplementärwinkels γ zum maximalen Knickwinkel αₘₐₓ beider Längenbereiche 10c bzw. 10d des Fördermittels 10 bzw. des Tragrahmens 2 entsprechenden Winkelbereich bezüglich der Achse 9 der zugeordneten Walze bzw. Rolle 3 übergreifende Bogenlänge aufweisen.

Die walzen- bzw. rollennahe Innenkontur 12c bzw. 13c der beiden Teilschürzen 12 bzw. 13 verläuft, wie aus Fig. 4 deutlich zu entnehmen, beim dargestellten Ausführungsbeispiel ebenso wie bei der Ausführung gem. Fig. 1 und 2 konform zur von der betreffenden Teilschürze 12 bzw. 13 übergriffenen Außenoberfläche der Walze bzw. Rolle 3. Das freie Ende zumindest der Teilschürze 12 findet Bewegungsspielraum für Arbeitsstellungen im Bereich des maximalen Knickwinkels αₘₐₓ in einer vorzugsweise etwa schlitzförmigen Aufnahmeöffnung 16 im Fuß der zugeordneten innenstückfesten Teilschürze 13. Auch beim Ausführungsbeispiel gemäß Fig. 3 und 4 kann ebenso wie bei der Ausführung gemäß Fig. 1 und 2 die Konturierung der walzen- bzw. rollennahen Innenoberfläche 12c bzw. 13c der Teilschürze 12 bzw. 13 von der Walzen- bzw. Rollenkontur abweichend, insbesondere einen zwischen ihrem trumnahen und ihrem freien Endbereich einen zunehmend größeren Abstand zur Walzen- bzw. Rollenoberfläche einhaltend konturiert sein.

Wie aus Fig. 3 und 4 zu entnehmen, weist die innenstückfeste Teilschürze 13 als die Schürze des fördermitteleinlaufseitigen Tragstückes 6 der Walzen- bzw. Rollenlagerungseinrichtung in ihrem fördermittelnahen Fußbereich eine zur Fördermittelebene 10e geneigte Auflauframpe 15 auf. Durch diese wird dazu beigetragen, daß durch Auflagekontakt auf dem einlaufenden Trum des Fördermittels 10 mitgeführte und angeförderte Fremdkörper ebenso wie insbesondere auch Gliedmaßen oder Kleidungsstücke von dem Fördermitteltrum abgehoben werden und die Auflauframpe 15 hinaufgleiten. Eine gleichartige Auflauframpe könnte auch im Fußbereich der außenstückfesten Teilschürze 12 vorgesehen sein.

Wie insbesondere in Fig. 4 verdeutlicht, weisen beide Teilschürzen 12 bzw. 13 fördertrumseitige Oberflächen 12b bzw. 13b ihrer Fußbereiche auf, die jeweils parallel zum zugeordneten auslaufseitigen Längenbereich 10d bzw. einlaufseitigen Längenbereich 10c des Fördermittels 10 verlaufen. Statt dessen könnte aber auch zumindest einer dieser Teilschürzen-Fußbereichs-Oberflächen 12b bzw. 13b mit Neigung gegenüber dem zugeordneten Längenbereich 10d bzw. 10c des Fördermittels 10 verlaufend ausgebildet sein.

Auf jeden Fall wird auch bei der Ausführung eines Knickbeschlages 14 gemäß Fig. 3 und 4 eine zuverlässige Vorlauf-und Rücklaufsicherung der zugriffsgefährdeten Zwischenräume 8 bzw. 7 zwischen Fördermittel 10 und Walzen- bzw. Rollenoberfläche gegen Verschmutzungen und Unfallgefahren beschriebener Art gewährleistet.

Hervorzuheben ist in diesem Zusammanhang, daß - obgleich in Fig. 4 der größeren Deutlichkeit halber die Erfindung lediglich im Zusammenhang mit einer Niederhalterolle für das Obertrum des Fördermittels 10 dargestellt und erläutert ist, in gleicher Weise natürlich auch eine Sicherung für eine Umlenkwalze bzw. -rolle bzw. einen entsprechenden Walzen-bzw. Rollensatz für das Untertrum des Fördermittels vorgesehen sein kann, obgleich dies meist dann nicht erforderlich ist, wenn das Untertrum des Fördermittels über ein Leitblech umgelenkt wird. Während bei einer solchen Sicherungsvorrichtung für eine zwischen Ober- und Untertrum des Fördermittels 10 liegende Umlenkung des Untertrums desselben jedenfalls die innenliegende Teilschürze, die beispielsweise der innenstückfesten Teilschürze 13 entsprechen könnte, sich ebenso wie die Schürze 11 des Ausführungsbeispiels gemäß Fig. 1 und 2 auch über die gesamte Breite des lichten Zwischenraums zwischen beiden einander gegenüberliegenden Tragstücken der zugeordneten Lagerungseinrichtung in Richtung des Pfeiles D erstrecken kann, ist im Falle der dargestellten Lagerung einer Niederhalterolle 3 nur eine Sicherungsvorrichtung erwünscht, die sich breitenmäßig in Richtung des Pfeiles D gemäß Fig. 3 lediglich über einen seitlichen Randbereich des Obertrums des Fördermittels 10 erstreckt, so daß auch die etwa nur einfach vorgesehene Schürze 12 bzw. 13 oder aber beide miteinander zusammenwirkenden Teilschürzen 12, 13 eine entsprechend begrenzte Breitendimension aufweisen.

In Fig. 3 ist im übrigen ferner auch noch dargestellt, daß die betreffende Walzen- bzw. Rollenachse 9 keineswegs nur in einem Rundloch in den Traglappen 5c bzw. 6c des Außenstückes 5 bzw. des Innenstückes 6 des Knickbeschlages 14 gehalten zu sein braucht. Vielmehr sind in Fig. 3 Langlöcher 17 dargestellt, die sich jeweils parallel zur Ausrichtung der Bereiche der zugeordneten Tragstücke erstrecken, mit denen diese an zugeordneten Teilen des Tragrahmens 2 gehalten werden, also beispielsweise parallel zu den Führungsschlitzen 5a bzw. 6a von Außenstück 5 und Innenstück 6 des Knickbeschlages 14. Dabei ist die Anordnung so getroffen, daß sich beide Längsschlitze 17 in außenstückfestem und innenstückfestem Traglappen 5c bzw. 6c zumindest teilweise überdecken, und zwar dies mit Vorzug in nicht geknickter Arbeitsstellung, so daß sich bei Knickstellung beide Langlöcher 17 kreuzen oder bei entsprechendem Auseinanderziehen beider Teile des Knickbeschlages 14 relativ zueinander zumindest das eine Ende des einen Langloches 14 gerade noch das andere Langloch überdeckt. Die Festlegung der Welle bzw. Achse 9 in ihrer Arbeitsstellung erfolgt dabei durch eine Lagerhalterung 18, welche die sich überdeckenden Langlöcher 17 beider Tragstücke 5, 6 gemeinsam durchgreift. Es ist ersichtlich, daß auf diese Weise unterschiedliche Anstellstellungen der Drehachse 9 der Walze bzw. Rolle relativ zum zugeordneten Tragstück und damit auch zum einlauf- und/oder auslaufseitigen Bereich 10c bzw. 10d des betreffenden Trums des Fördermittels ermöglicht werden. Voraussetzung hierfür ist allerdings, daß der Zwischenraum zwischen schürzenseitiger Oberfläche 3a von Walze bzw. Rolle 3 und Innenoberfläche 12c bzw. 13c von Schürze 12 bzw. 13 einen entsprechenden Abstand bietet. Hierfür empfiehlt sich wiederum besonders eine Ausführung, bei welcher beide Schürzen 12 bzw. 13 auf ihrer walzen- bzw. rollennahen Seite eine zwischen dem trumnahen und dem freien Endbereich ihrer walzen- bzw. rollennahen Oberfläche 12c bzw. 13c einen zunehmend größeren Abstand zur Walzen- bzw. Rollenoberfläche 3a einhaltende Kontur aufweisen.

Im übrigen ist die Erfindung, obgleich sie lediglich anhand einiger bevorzugter Ausführungsbeispiele dargestellt und erläutert worden ist, nicht auf diese beschränkt, vielmehr stehen dem Fachmann vielfältige Möglichkeiten offen, sie durch andere Kombination ihrer Merkmale oder Austausch derselben gegen gleichwertige Mittel an unterschiedlichste Gegebenheiten materialmäßiger und/oder herstellungstechnischer und/oder konstruktions- bzw. einsatzbedingter Art und/oder die Forderungen des einzelnen Einsatzfalles anzupassen, ohne dadurch den Rahmen der Erfindung, wie in den Ansprüchen definiert, zu verlassen.

## Patentansprüche

1. Vorrichtung für einen Bandförderer (1), der einen Tragrahmen (2) mit je links und rechts angeordneten in Längsrichtung jeweils einzeln gegenüber dem Tragrahmen (2) verstellbaren Tragstücken (4) aufweist, in denen je eine Walze (3) oder Rolle für das Fördermittel (10) aufgenommen ist, wobei die Tragstücke je ein mit einem Tragstück verbundenes Abdeckglied aufweisen zur Abdeckung eines zugriffgefährdeten Zwischenraumes (7,8) zwischen dem tragrahmennahen Umfangsbereich der Walze (3) und dem Tragrahmen in diesem Bereich mit Hilfe der Abdeckglieder, die von der Tragrahmenseite her nach innen verlaufend angeordnet sind und hierbei zumindest die Unterseite des Obertrums (10a) untergreifen wobei außerdem das Abdeckglied (11 bzw. 12 bzw. 13) eine zwischen dem Obertrum (10a) und dem Untertrum (10b) angeordnete Vorderseite aufweist, die den Umfang der Walze (3) bzw. der Rolle im tragrahmennahen Umfangbereich (3a) umgreift, und weiter eine ebene Oberseite aufweist, die in ihrer Längserstreckung etwa parallel zur Unterseite des Obertrums verläuft sowie weiter eine ebene Unterseite aufweist, die in ihrer längserstreckung etwa parallel zur Oberseite des Untertrums verläuft, je lediglich mit einem Bewegungs- oder Einstellungsspielraum, wobei Oberseite und Unterseite in ihrer Breite der Vorderseite entsprechen und mit dieser verbunden sind, wodurch sich ein Füllstück ergibt.

2. Vorrichtung nach Anspruch 1 für einen Bandförderer (1) Geradförderbauart, dadurch gekennzeichnet, daß das Abdeckglied als zumindest den tragrahmennahen Bereich (3a) der Walze (3) bzw. Rolle auf deren nicht das Fördermittel (10) führender Seite von lediglich einen Bewegungs- oder Einstellspielraum für des Obertrum (10a) des Fördermittels (10) gewährend unterhalb desselben bis lediglich einen Bewegungs- oder Einstellspielraum für des Untertrum (10b) des Fördermittels (10) gewährend oberhalb desselben hintergreifendes Füllstück (11) ausgebildet ist.

3. Vorrichtung nach Anspruch 1 für einen Bandförderer (1) in Knickfördererbauart mit winkelmäßig gegeneinander geneigten Längenbereichen des Fördermittels (10) und des dieses tragenden Tragrahmens (2), dadurch gekennzeichnet, daß das Abdeckglied als zumindest den tragrahmennahen Bereich (3a) der im Knickbereich eingesetzten Umlenkwalze (3) bzw. Umlenkrolle oder Niederhaltewalze bzw. -rolle von deren nicht des Fördermittel (10) führender Seite her auf einem lediglich einen Bewegungs- oder Einstellspielraum für dieses gewährenden Winkelbereich (β) bezüglich der Drehachse (9) der zugeordneten Walze (3) bzw. Rolle übergreifendes Füllstück (z.B. 12) ausgebildet ist.

4. Vorrichtung nach Anspruch 1 für einen Bandförderer (1) in Knickfördererbauart mit winkelmäßig gegeneinander verstellbaren Längenbereichen des Fördermittels (10) und des dieses tragenden Tragrahmens (2), dadurch gekennzeichnet, daß das Abdeckglied als zumindest den tragrahmennahen Bereich (3a) der im Knickbereich eingesetzten Umlenkwalze (3) bzw. Umlenkrolle oder Niederhaltewalze bzw. -rolle von deren nicht das Fördermittel (10) führender Seite her auf einem dem Komplementärwinkel (γ) zum maximalen Knickwinkel (αₘₐₓ) beider Längenbereiche (10c, 10d) des Fördermittels (10) bzw. des Tragrahmens (2) entsprechenden Winkelbereich bezüglich der Drehachse (9) der zugeordneten Walze (3) bzw. Rolle übergreifendes Füllstück (z.B. 12 bzw. 13) ausgebildet ist.

5. Vorrichtung nach Anspruch 1 für einen Bandförderer (1) in Knickfördererbauart mit winkelmäßig gegeneinander verstellbaren Längenbereichen des Fördermittels (10) und des dieses tragenden Tragrahmens (2), dadurch gekennzeichnet, daß das fördermittelauslauf- und das fördermitteleinlaufseitige Tragstück (5 bzw. 6) der Lagerüngseinrichtung für die im Knickbereich eingesetzte Umlenkwalze (3) bzw. Umlenkrolle oder Niederhaltewalze bzw. -rolle je ein Abdeckglied in Form einer zumindest den tragrahmennahen Bereich (3a) dieser Walze (3) bzw. Rolle von deren nicht das Fördermittel (10) führender Seite her übergreifenden Teilfüllstück (12 bzw. 13) aufweist, wobei beide Teilfüllstücke (12, 13) in Achsrichtung (D) der zugeordneten Walze (3) bzw. Rolle versetzt zueinander angeordnet sind und eine in ihrer Summe mindestens dem Komplementärwinkel (γ) zum maximalen Knickwinkel (αₘₐₓ) beider längenbereiche (10c bzw. 10d) des Fördermittels (10) bzw. des Tragrahmens (2) entsprechende Bogenlänge aufweisen.

6. Vorrichtung nach Anspruch 1 für einen Bandförderer (1) in Knickfördererbauart mit winkelmäßig gegeneinander verstellbaren Längenbereichen des Fördermittels (10) und des dieses tragenden Tragrahmens (2), dadurch gekennzeichnet, daß das fördermittelauslauf- und das fördermitteleinlaufseitige Tragstück (5 bzw. 6) der Lagerungseinrichtung für die im Knickbereich eingesetzte Umlenkwalze (3) bzw. Umlenkrolle oder Niederhaltewalze bzw. -rolle je ein Abdeckglied in Form eines zumindest den tragrahmennahen Bereich (3a) dieser Walze (3) bzw. Rolle von deren nicht das Fördermittel (10) führender Seite her auf einem mehr als der Hälfte des Komplementärwinkels (γ) zum maximalen Knickwinkel (αₘₐₓ) beider Längenbereiche (10c bzw. 10d) des Fördermittels (10) bzw. des Tragrahmens (2) entsprechenden Winkelbereich bezüglich der Drehachse (9) der zugeordneten Walze (3) bzw. Rolle übergreifenden Teilfüllstückes (12 bzw. 13) aufweist, wobei beide Teilfüllstücke (12, 13) in Achsrichtung (D) dieser Walze (3) bzw. Rolle versetzt zueinander angeordnet sind.

7. Vorrichtung nach Anspruch 1 für einen Bandförderer (1) in Knickfördererbauart mit winkelmäßig gegeneinander verstellbaren Langenbereichen des Fördermittels (10) und des dieses tragenden Tragrahmens (2), dadurch gekennzeichnet, daß das fördermittelauslauf- und das fördermitteleinlaufseitige Tragstück (5 bzw. 6) der Lagerungseinrichtung für die im Knickbereich eingesetzte Umlenkwalze (3) bzw. Umlenkrolle oder Niederhaltewalze bzw. -rolle je ein Abdeckglied in Form eines zumindest den tragrahmennahen Bereich (3a) dieser Walze (3) bzw. Rolle von deren nicht das Fördermittel (10) führender Seite her auf einem unter Berücksichtigung eines Bewegungs- oder Einstellspielraums für des Fördermittel (10) mindestens 180° entsprechenden Winkelbereich übergreifenden Teilfüllstückes (12 bzw. 13) aufweist, wobei beide Teilfüllstücke (12, 13) in Achsrichtung (D) der, zugeordneten Walze (3) bzw. Rolle versetzt zueinander angeordnet sind.

8. Vorrichtung nach einem der Ansprüche 3 bis 7, dadurch gekennzeichnet, daß zumindest eines der Füllstücke bzw. Teilfüllstücke (12 bzw. 13), vorzugsweise das Füllstück bzw. Teilfüllstück (13) des fördermitteleinlaufseitigen Tragstücks (6) der Lagerungseinrichtung für die im Knickbereich eingesetzte Umlenkwalze (3) bzw. tragrahmennahe Umlenkrolle oder Niederhaltewalze bzw. -rolle, in ihrem fördermittelnahen Fußbereich eine zur Fördermittelebene (10e) geneigte Auflauframpe (15) aufweist.

9. Vorrichtung nach Anspruch 8 mit zwei miteinander zusammenwirkenden Teilfüllstücken für Bandförderer (1) in Knickfördererbauart, dadurch gekennzeichnet, daß die Auflauframpe (15) sich über zumindest einen Teil der Breite des zugeordneten anderen Teilfüllstückes (12 bzw. 13) in Achsrichtung (D) der zugeordneten Walze (3) bzw. Rolle erstreckt.

10. Vorrichtung nach Anspruch 1 oder 2, dadurch gekennzeichnet, daß das Füllstück (11) ober- und/oder untertrumseitig eine spannrichtungsparallele Oberfläche (z.B. 11a) aufweist.

11. Vorrichtung nach einem der Ansprüche 1, 2 oder 10, dadurch gekennzeichnet, daß das Füllstück (11) ober- und/oder untertrumseitig eine bezüglich der Drehachse (9) der zugeordneten Walze (3) bzw. Rolle divergierend geneigte Oberfläche (11b) aufweist.

12. Vorrichtung nach einem der Ansprüche 1, 2 oder 10, dadurch gekennzeichnet, daß das Füllstück (11) ober- und/oder untertrumseitig eine bezüglich der Drehachse (9) der zugeordneten Walze (3) bzw. Rolle konvergierend geneigte Oberfläche aufweist.

13. Vorrichtung nach einem der Ansprüche 3 bis 9, dadurch gekennzeichnet, daß das Füllstück (z.B. 12) bzw. zumindest eines der Teilfüllstücke (12 bzw. 13) trumseitig eine bei maximalem Knickwinkel (αₘₐₓ) beider Längenbereiche (10c, 10d) des Fördermittels (10) bzw. des Tragrahmens (2) zur Spannrichtung des zugeordneten Fördermittelbereiches (10c bzw. 10d) parallele Oberfläche (12b bzw. 13b) aufweist.

14. Vorrichtung nach einem der Ansprüche 3 bis 9, dadurch gekennzeichnet, daß das Füllstück bzw. zumindest eines der Teilfüllstücke (12 bzw. 13) trumseitig eine bei maximalem Knickwinkel (αₘₐₓ) beider Längenbereiche (10c, 10d) des Fördermittels (10) bzw. das Tragrahmens (2) zur Spannrichtung des zugeordneten Fördermittelbereichs (10c bzw. 10d) divergierend geneigte Oberfläche aufweist.

15. Vorrichtung nach einem der Ansprüche 3 bis 9, dadurch gekennzeichnet, daß das Füllstück bzw. zumindest eines der Teilfüllstücke (12 bzw. 13) trumseitig eine bei maximalem Knickwinkel (αₘₐₓ) beider Längenbereiche (10c, 10d) des Fördermittels (10) bzw. des Tragrahmens (2) zur Spannrichtung des zugeordneten Fördermittelbereichs (10c bzw. 10d) Konvergierend geneigte Oberfläche aufweist.

16. Vorrichtung nach einem der vorhergehenden Ansprüche, dadurch gekennzeichnet, daß das Füllstück (11 bzw. 12 bzw. 13) bzw. zumindest eines der Teilfüllstücke (12, 13) auf ihrer walzen- bzw. rollennahen Seite eine der Walzen- bzw. Rollenoberfläche konforme Kontur (11c bzw. 12c bzw. 13c) aufweist.

17. Vorrichtung nach einem der Ansprüche 1 bis 15, dadurch gekennzeichnet, daß das Füllstück (11 bzw. 12 bzw. 13) bzw. zumindest eines der Teilfüllstücke (12, 13) auf ihrer walzen- bzw. rollennahen Seite eine von der Walzen- bzw. Rollenoberfläche abweichende Kontur (11c bzw. 12c bzw. 13c) aufweist.

18. Vorrichtung nach Anspruch 17, dadurch gekennzeichnet, daß das Füllstück (11 bzw. 12 bzw. 13) bzw. zumindest eines der Teilfüllstücke (12, 13) auf ihrer walzen- bzw. rollennehen Seite eine zwischen dem obertrumnahen und dem untertrumnahen Endbereich bzw. dem trumnahen und dem freien Endbereich ihrer walzen- bzw. rollennahen Oberfläche einen größeren Abstand zur Walzen- bzw. Rollenoberfläche als diese Endbereiche einhaltende Kontur (11c bzw. 12c bzw. 13c) aufweist.

19. Vorrichtung nach Anspruch 17 für einen Bandförderer (1) in Knickfördererbauart mit winkelmäßig gegeneinander verstellbaren Längenbereichen des Fördermittels (10) und des dieses tragenden Tragrahmens (2) und mit diesen Bereichen jeweils zugeordneten Teilfüllstücken der Lagerungseinrichtung, dadurch gekennzeichnet, daß beide Teilfüllstücke (12, 13) auf ihrer walzen- bzw. rollennahen Seite eine zwischen dem trumnahen und dem freien Endbereich ihrer walzen- bzw. rollennahen Oberfläche einen zunehmend größeren Abstand zur Walzen-bzw. Rollenoberfläche einhaltende Kontur (12c bzw. 13c) aufweist.

20. Vorrichtung nach einem der vorhergehenden Ansprüche, dadurch gekennzeichnet, daß das Füllstück (11 bzw. 12 bzw. 13) bzw. Teilfüllstück (12 bzw. 13) am zugeordneten Tragstück (4 bzw. 5 bzw. 6) der Lagerungseinrichtung lösbar festgelegt ist.

21. Vorrichtung nach einem der Ansprüche 1 bis 19, dadurch gekennzeichnet, daß das Füllstück (11 bzw. 12 bzw. 13) bzw. Teilfüllstück (12 bzw. 13) am zugeordneten Tragstück (4 bzw. 5 bzw. 6) der Lagerungseinrichtung fest angeordnet ist.

22. Vorrichtung nach Anspruch 21, dadurch gekennzeichnet, daß das Füllstück (11 bzw. 12 bzw. 13) bzw. Teilfüllstück (12 bzw. 13) am zugeordneten Tragstück (4 bzw. 5 bzw. 6) der Lagerungseinrichtung angeschweißt, beispielsweise durch Punktschweißen, angenietet oder angeklebt ist.

23. Vorrichtung nach Anspruch 21, dadurch gekennzeichnet, daß das Füllstück (11 bzw. 12 bzw. 13) bzw. Teilfüllstück (12 bzw. 13) am zugeordneten Tragstück (4 bzw. 5 bzw. 6) der Lagerungseinrichtung angeformt, beispielsweise angegossen ist.

24. Vorrichtung nach einem der vorhergehenden Ansprüche mit zwischen zwei Trums des Fördermittels gelegenem Füllstück oder gelegenem Teilfüllstück der Lagerungseinrichtung, dadurch gekennzeichnet, daß das Füllstück (11 bzw. 12 bzw. 13) bzw. Teilfüllstück (12 bzw. 13) sich über den freien Zwischenraum zwischen beiden einander entsprechenden, auf unterschiedlichen Tragrahmenseiten angeordneten Tragstücken (4 bzw. 5 bzw. 6) der Lagerungseinrichtung erstreckt.

25. Vorrichtung nach einem der vorhergehenden Ansprüche, dadurch gekennzeichnet, daß die dem Füllstück (11 bzw. 12 bzw. 13) bzw. Teilfüllstück (12 bzw. 13) zugeordnete Walzen- oder Rollenachse (9) oder -welle im zugeordneten Tragstück (4 bzw. 5 bzw. 6) bzw. in den zugeordneten Tragstücken (4 bzw. 5 bzw. 6) der Lagerungseinrichtung relative zum Füllstück ( 11 bzw. 12 bzw. 13) bzw. Teilfüllstück (12 bzw. 13) verschiebbar gehalten ist.

26. Vorrichtung nach Anspruch 25, dadurch gekennzeichnet, daß das das Füllstück (11 bzw. 12 bzw. 13) bzw. Teilfüllstück (12 bzw. 13) aufweisende Tragstück (4 bzw. 5 bzw. 6) der Lagerungseinrichtung mindestens ein Langloch (17) aufweist, in dem die zugeordnete Walzen- oder Rollenachse (9) oder -welle mittels einer Lagerhalterung (18) verschiebbar gehalten ist.

27. Vorrichtung nach Anspruch 25 für einen Bandförderer (1) in Knickfördererbauart mit winkelmäßig gegeneinander verstellbaren Längenbereichen des Fördermittels (10) und des dieses tragenden Tragrahmens (2) und mit diesen Bereichen jeweils zugeordneten Teilfüllstücken der Lagerungseinrichtung, dadurch gekennzeichnet, daß die die Teilfüllstücke (12 bzw. 13) aufweisenden Tragstücke (5 bzw. 6) der Lagerungseinrichtung jeweils mindestens ein vorzugsweise in Richtung des einlaufenden und/oder in Richtung des auslaufenden Trums (10c bzw. 10d) des Fördermittels (10) ausgerichtetes Langloch aufweisen, wobei das Langloch bzw. mindestens eines der Langlöcher (17) des einen Tragstückes (6) das Langloch bzw. mindestens eines der Langlöcher (17) des anderen Tragstücks (5) zumindest teilweise überdeckt und die zugeordnete Walzen- oder Rollenachse (9) oder -welle mittels einer die sich überdeckenden Langlöcher (17) beider Tragstücke (5, 6) gemeinsam durchgreifenden Lagerhalterung (18) verschiebbar gehalten sind.

## Claims

1. Device for a belt conveyor (1) which has a support frame (2) having support pieces (4) which are displaceable with respect to the support frame (2) and which are disposed in the longitudinal direction left and right respectively, the support pieces (4) accommodating the roller (3) in the conveying means (10) and each having a cover connected to the support piece for the purpose of covering a space (7, 8), in danger of being accessed, between the peripheral region, in the proximity of the support frame, of the roller (3) and the support frame in this region by means of a cover, which is disposed running inwardly from the side of the support frame, and hereby at least engages under the lower side of the carrying run (10a) and moreover the cover (10 and 12 and 13) has a front side, disposed between the carrying run (10a) and the return run (10b), which encompasses the periphery of the roller (3) in the peripheral region (3a) in the proximity of the support frame, and further has a flat upper side, which runs in its longitudinal extension approximately parallel to the lower side of the carrying run and also further a flat lower side, which runs in its longitudinal extension approximately parallel to the upper side of the return run, each simply with a range of movement or adjustment, and the upper side and lower side correspond in their width to the front side to which they are connected, in this way producing a filler piece.

2. Device according to claim 1 for a belt conveyor (1) of a straight belt construction, characterised in that the cover is designed as a filler piece (11) engaging behind at least the region (3a), in the proximity of the support frame, of the roller (3) on its side not guiding the conveying means (10) and provides a range of movement or adjustment for the carrying run (10a) of the conveying means (10) below same and a range of movement or adjustment for the return run (10b) of the conveying means (10) above same.

3. Device according to claim 1 for a belt conveyor (1) of a cranked belt construction, wherein the longitudinal regions of the conveying means (10) and of the supporting (2) carrying the conveying means (10) can be displaced at an angle to each other, characterised in that the cover is designed as a filler piece (e.g. 12) overlapping at least the region (3a), in the proximity of the support frame, of the idle roller (3) used in the cranked region or holding down roller, from its side not guiding the conveying means (10) at an angle region (β) providing for this only one range of movement or adjustment with respect to the rotational axis (9) of the associated roller (3).

4. Device according to claim 1 for a belt conveyor (1) of a cranked belt construction, wherein the longitudinal regions of the conveying means (10) and of the supporting frame (2) carrying the conveying means (10) can be displaced at an angle to each other, characterised in that the cover is designed as a filler piece (e.g. 12 and 13) overlapping at least the area (3a), in the proximity of the support frame, of the idle roller (3) used in the cranked region and the idle roller or holding down roller, from its side not guiding the conveying means (10) at an angle region corresponding to the complementary angle (γ) to the maximum cranked angle (αₘₐₓ) of the two longitudinal regions (10c, 10d) of the conveying means (10) and of the support frame (2), with respect to the rotational axis (9) of the associated roller (3).

5. Device according to claim 1 for a belt conveyor (1) of a cranked belt construction, wherein the longitudinal regions of the conveying means (10) and of the supporting frame (2) carrying the conveying means (10) can be displaced at an angle to each other, characterised in that the supporting piece (5 and 6), on the exit and entry side of the conveying means, of the mounting device for the idle roller (3) used in the cranked region and idle roller or holding down roller each has a cover in the form of a partial filler piece (12 and 13) overlapping at least the region (3a), in the proximity of the support frame, of this roller (3) from its side not guiding the conveying means (10); both partial filler pieces (12, 13) are disposed staggered in the axial direction D of the associated roller (3) and have a arc length corresponding in its total at least to the complementary angle (γ) to the maximum cranked angle (αₘₐₓ) of the two longitudinal regions (10c and 10d) of the conveying means (10) and of the support frame (2).

6. Device according to claim 1 for a belt conveyor of a cranked belt construction, wherein the longitudinal regions of the conveying means (10) and of the support frame (2) carrying the conveying means (10) can be displaced at an angle to each other, characterised in that the supporting piece (5 or 6) at the exit or entry side of the conveying means, of the mounting device for the idle roller (3) used in the cranked area and the idle roller or the holding down roller each has a cover in the form of a filler piece (12 and 13) which overlaps at least the region (3a), in the proximity of the support frame, of this roller (3) from its side not carrying the conveying means (10) at an angle region corresponding to more than half of the complementary angle (γ) to the maximum cranked angle (αₘₐₓ) of the two longitudinal regions (10c and 10d) of the conveying means (10) and of the support frame (2), with respect to the rotational axis (9) of the associated roller (3), both partial filler pieces (12, 13) being disposed staggered in the axial direction E of this roller (3).

7. Device according to claim 1 for a belt conveyor (1) of a cranked belt construction, wherein the longitudinal regions of the conveying means (10) and of the support frame (12) carrying the conveying means (10) can be displaced at an angle to each other, characterised in that the supporting piece (5 and 6), at the exit and entry side of the conveying means of the mounting device for the idle roller (3) used in the cranked area and idle roller or holding down roller each have a cover in the form of a partial filler piece (12 and 13) overlapping at least the region (3a), in the proximity of the support frame, of this roller (3) from its side not guiding the conveying means (10) at a corresponding angle region taking into consideration a range of movement or adjustment for the conveying means of at least 180°, both partial filler pieces (12, 13) being disposed staggered in the axial direction D of the associated roller (3).

8. Device according to any of claims 3 to 7, characterised in that at least one of the filler pieces or partial filler pieces (12 and 13), preferably the filler piece or partial filler piece (13) of the supporting piece (6) on the entry side of the conveying means, of the mounting device for the idle roller (3) used in the cranked region and idle roller in the proximity of the support frame or holding down roller, has an upwardly inclined ramp (15) inclined to the plane of the conveying means (10e).

9. Device according to claim 8 having two partial filler pieces interacting with each other for a belt conveyor (1) of a cranked belt construction, characterised in that the upwardly inclined ramp (15) extends beyond at least one part of the width of the associated other partial protective guard (12 or 13) in the axial direction D of the associated roller (3).

10. Device according to claim 1 and 2, characterised in that the filler piece (11) has on the side of the carrying run and/or return run a surface (e.g. 11a) parallel to the direction of the tensioning.

11. Device according to any of claims 1, 2 or 10, characterised in that the filler piece (11) on the side of the upper and/or return run has a surface (11b) which is divergently inclined with respect to the rotational axis (9) of the associated roller (3).

12. Device according to any of claims 1, 2 or 10, characterised in that the filler piece (11) on the side of the carrying run and/or return run has a surface convergently inclined with respect to the rotational axis (9) of the associated roller (3).

13. Device according to any of claims 3 to 9, characterised in that in the event of a maximum cranked angle (αₘₐₓ) of the two longitudinal regions (10c, 10d) of the conveying means (10) and of the support frame (2) the filler piece (e.g. 12) and at least one of the partial filler pieces (12 and 13) on the side of the belt, has a surface (12b or 13b) parallel to the direction of tensioning of the associated region (10c and 10d) of the conveying means.

14. Device according to any of claims 3 to 9, characterised in that in the event of a maximum cranked angle (αₘₐₓ) of the two longitudinal regions (10c, 10d) of the conveying means (10) and of the support frame (2) the filler piece and at least one of the partial filler pieces (12 and 13) on the side of the belt have a surface divergently inclined to the direction of tensioning of the associated region (10c and 10d) of the conveying means.

15. Device according to any of claims 3 to 9, characterised in that in the event of a maximum cranked angle (αₘₐₓ) of the two longitudinal regions (10c and 10d) of the conveying means (10) and the support frame (2) the filler piece and at least one of the partial filler pieces (12 and 13) on the side of the run have a surface convergently inclined to the direction of tensioning of the associated region (10c and 10d) of the conveying means.

16. Device according to any of the aforementioned claims, characterised in that the filler piece (11 and 12) and (13) and at least one of the partial filler pieces (12, 13) has on their sides in the proximity of the rollers, a contour (11c and 12c and 13c), which conforms to the surface of the roller.

17. Device according to any of claims 1 to 15, characterised in that the filler piece (11 and 12 and 13) and at least one of the partial filler pieces (12, 13) has, on its side in the proximity of the roller, a contour (11c and 12c and 13c) which is different from the surface of the roller.

18. Device according to claim 17, characterised in that the filler piece (11 and 12 and 13) and at least one of the partial filler pieces (12, 13) has, on its side in the proximity of the roller, a contour, between the end region in the proximity of the carrying run and the end region in the proximity of the return run or rather the end region in the proximity of the run and the free end region which maintains a greater distance to the surface of the roller than these end regions.

19. Device according to claim 17 for a belt conveyor (1) of a cranked belt conveyor construction, wherein the longitudinal regions of the conveying means (10) and of the support frame (2) carrying the conveying means (10) can be displaced at a angle to each other, and having partial protective guards, of the mounting device, associated in each case with these regions, characterised in that the two partial protective guards (12, 13) have on their side in the proximity of the roller, a contour (12c and 13c) maintaining, between the end region, in the proximity of the run, of their surface in the near to the roller and the free end region of their surface near to the roller, an increasingly greater distance to the surface of the roller.

20. Device according to any of the aforementioned claims, characterised in that the filler piece (11 and 12 and 13) and partial filler pieces (12 and 13) are releasably located on the associated support piece (4 and 5 and 6) of the mounting device.

21. Device according to any of claims 1 to 19, characterised in that the filler piece (11 and 12 and 13) and the partial protective guard (12 and 13) is fixedly disposed on the associated support piece (4 and 5 and 6) of the mounting device.

22. Device according to claim 21, characterised in that the filler piece (11 and 12 and 13) and the partial filler piece (12 and 13) is welded, for example by means of spot welding, riveted on or stuck on to the associated support piece (4 and 5 and 6) of the mounting device.

23. Device according to claim 21, characterised in that the filler piece (11 and 12 and 13) and the partial filler piece (12 and 13) is moulded on to the associated support piece (4 and 5 and 6) of the mounting device, for example cast as an integral part of the associated support piece (4 and 5 and 6).

24. Device according to any of the aforementioned claims having between the two runs of the conveying means, a filler piece or partial filler piece of the mounting device, characterised in that the filler piece (11 and 12 and 13) and the partial filler piece (12 and 13) extend beyond the free space between the support pieces (4 and 5 and 6) of the mounting device, the two support pieces (4 and 5 and 6) being disposed correspondingly to each other on different sides of the support frame.

25. Device according to any of the aforementioned claims, characterised in that the roller axle (9) or shaft associated with the filler piece (11 and 12 and 13) and the partial filler piece (12 and 13) is displaceably held in the associated support piece (4 and 5 and 6) or rather in the associated support pieces (4 and 5 and 6) of the mounting device relative to the filler piece (11 and 12 and 13) and the partial filler piece (12 and 13).

26. Device according to claim 25, characterised in that the support piece (4 and 5 and 6), of the mounting device, which have the filler piece (11 and 12 and 13) and the partial filler piece (12 and 13) has at least one elongated hole (17) in which the associated roller axle (9) or shaft is displaceably held by means of a mounting device (18).

27. Device according to claim 25 for a belt conveyor (1) of a cranked belt conveyor construction, wherein the longitudinal regions of the conveying means (10) and of the support frame (2) carrying the conveying means (10) can be displaced at an angle to each other, and having partial filler pieces, of the mounting device, associated in each case with these regions, characterised in that the support pieces (5 and 6), of the mounting device, having the partial filler pieces (12 and 13) have in each case at least one elongated hole aligned preferably in the direction of the incoming and/or in the direction of the exiting run (10c and 10d) of the conveying means (10), and the elongated hole or rather at least one of the elongated holes (17) of one support piece (6) overlaps at least partly the elongated hole of at least one or the elongated holes (17) of the other support piece (5) and the associated roller axle (9) or shaft is displaceably held by means of a mounting (18) jointly penetratingly the overlapping elongated holes (17) of the two support pieces (5,6).

## Revendications

1. Dispositif pour un convoyeur à bande (1) possédant un cadre porteur (2) pourvu d'éléments porteurs (4) qui sont disposés respectivement à gauche et à droite, qui sont réglables individuellement par rapport au cadre porteur (2) dans le sens longitudinal, et dans lesquels sont logés des cylindres (3) ou rouleaux respectifs pour le moyen formant convoyeur (10), étant précisé que les éléments porteurs possèdent chacun un organe de recouvrement relié à un élément porteur et destiné à recouvrir un interstice (7, 8), dont l'accès est dangereux, défini entre la zone périphérique du cylindre (3) proche du cadre porteur, et celui-ci, dans cette zone, à l'aide des organes de recouvrement qui sont disposés vers l'intérieur, à partir du côté du cadre porteur, et couvrent par en dessous au moins la face inférieure du brin supérieur (10a), étant précisé également que l'organe de recouvrement (11, 12 ou 13) possède une face avant, disposée entre le brin supérieur (10a) et le brin inférieur (10b), qui entoure la circonférence du cylindre (3) ou du rouleau dans la zone périphérique (3a) proche du cadre porteur, et possède en outre une face supérieure plane approximativement parallèle, dans son extension longitudinale, à la face inférieure du brin supérieur, ainsi qu'une face inférieure plane approximativement parallèle, dans son extension longitudinale, à la face supérieure du brin inférieur, avec un simple jeu de mouvement ou de réglage, les faces supérieure et inférieure correspondant, par leur largeur, à la face avant, et étant reliées à celle-ci, ce qui donne une pièce intercalaire.

2. Dispositif selon la revendication 1 pour un convoyeur à bande (1) de construction droite, caractérisé en ce que l'organe de recouvrement est conçu comme une pièce intercalaire (11) qui couvre par derrière au moins la zone (3a), proche du cadre porteur, du cylindre (3) ou du rouleau, à partir du côté de celui-ci ne guidant pas le moyen formant convoyeur (10), en commençant au-dessous du brin supérieur (10a) du moyen formant convoyeur (10), où elle garantit seulement un jeu de mouvement ou de réglage pour ledit brin supérieur (10a), jusqu'au-dessus du brin inférieur (10b) dudit moyen formant convoyeur (10), où elle garantit seulement un jeu de mouvement ou de réglage pour ledit brin inférieur (10b).

3. Dispositif selon la revendication 1 pour un convoyeur à bande (1) de construction coudée, comportant des zones longitudinales, inclinées suivant un certain angle l'une par rapport à l'autre, du moyen formant convoyeur (10) et du cadre porteur (2) portant celui-ci, caractérisé en ce que l'organe de recouvrement est conçu comme une pièce intercalaire (par exemple 12) qui couvre au moins la zone (3a), proche du cadre porteur, du cylindre de déviation (3), du rouleau de déviation ou du cylindre ou rouleau abaisseur placé dans la zone coudée, à partir du côté de celui-ci ne guidant pas le moyen formant convoyeur (10), sur une zone angulaire (β) garantissant seulement un jeu de mouvement ou de réglage pour ledit moyen (10) par rapport à l'axe de rotation (9) du cylindre (3) ou rouleau associé.

4. Dispositif selon la revendication 1 pour un convoyeur à bande (1) de construction coudée, comportant des zones longitudinales du moyen formant convoyeur (10) et du cadre porteur (2) portant celui-ci qui sont réglables suivant un certain angle l'une par rapport à l'autre, caractérisé en ce que l'organe de recouvrement est conçu comme une pièce intercalaire (par exemple 12 ou 13) qui couvre au moins la zone (3a), proche du cadre porteur, du cylindre de déviation (3), du rouleau de déviation ou du cylindre ou rouleau abaisseur placé dans la zone coudée, à partir du côté de celui-ci ne guidant pas le moyen formant convoyeur (10), sur une zone angulaire correspondant à l'angle complémentaire γ de l'angle de coude maximal (αₘₐₓ) des deux zones longitudinales (10c, 10d) du moyen formant convoyeur (10) ou du cadre porteur (2), par rapport à l'axe de rotation (9) du cylindre (3) ou rouleau associé.

5. Dispositif selon la revendication 1 pour un convoyeur à bande (1) de construction coudée, comportant des zones longitudinales du moyen formant convoyeur (10) et du cadre porteur (2) portant celui-ci qui sont réglables suivant un certain angle l'une par rapport à l'autre, caractérisé en ce que les éléments porteurs (respectivement 5 et 6), situés côté sortie et côté entrée du moyen formant convoyeur, du dispositif de montage pour le cylindre (3), rouleau de déviation ou cylindre ou rouleau abaisseur placé dans la zone coudée possèdent chacun un organe de recouvrement ayant la forme d'une pièce intercalaire partielle (respectivement 12 et 13) qui couvre au moins la zone (3a), proche du cadre porteur, de ce cylindre (3) ou rouleau, à partir du côté de celui-ci ne guidant pas le moyen formant convoyeur (10), les deux pièces intercalaires partielles (12, 13) étant disposées de façon décalée l'une par rapport à l'autre dans le sens axial (D) du cylindre (3) ou rouleau associé, et présentent une longueur d'arc correspondant, par sa somme, au moins à l'angle complémentaire (γ) de l'angle de coude maximal (αₘₐₓ) des deux zones longitudinales (respectivement 10c et 10d) du moyen formant convoyeur (10) ou du cadre porteur (2).

6. Dispositif selon la revendication 1 pour un convoyeur à bande (1) de construction coudée, comportant des zones longitudinales du moyen formant convoyeur (10) et du cadre porteur (2) portant celui-ci qui sont réglables suivant un certain angle l'une par rapport à l'autre, caractérisé en ce que les éléments porteurs (respectivement 5 et 6), situés côté sortie et côté entrée du moyen formant convoyeur, du dispositif de montage pour le cylindre (3), rouleau de déviation ou cylindre ou rouleau abaisseur placé dans la zone coudée, possèdent chacun un organe de recouvrement ayant la forme d'une pièce intercalaire partielle (respectivement 12 et 13) qui couvre au moins la zone (3a), proche du cadre porteur, de ce cylindre (3) ou rouleau, à partir du côté de celui-ci ne guidant pas le moyen formant convoyeur (10), sur une zone angulaire correspondant à plus de la moitié de l'angle complémentaire (γ) de l'angle de coude maximal (αₘₐₓ) des deux zones longitudinales (respectivement 10c et 10d) du moyen formant convoyeur (10) ou du cadre porteur (2), par rapport à l'axe de rotation (9) du cylindre (3) ou rouleau associé, les deux pièces intercalaires partielles (12, 13) étant disposées de façon décalée l'une par rapport à l'autre dans le sens axial (D) de ce cylindre (3) ou rouleau.

7. Dispositif selon la revendication 1 pour un convoyeur à bande (1) de construction coudée, comportant des zones longitudinales du moyen formant convoyeur (10) et du cadre porteur (2) portant celui-ci qui sont réglables suivant un certain angle l'une par rapport à l'autre, caractérisé en ce que les éléments porteurs (respectivement 5 et 6), situés côté sortie et côté entrée du moyen formant convoyeur, du dispositif de montage pour le cylindre (3), rouleau de déviation ou cylindre ou rouleau abaisseur placé dans la zone coudée, possèdent chacun un organe de recouvrement ayant la forme d'une pièce intercalaire partielle (respectivement 12 et 13) qui couvre au moins la zone (3a), proche du cadre porteur, de ce cylindre (3) ou rouleau, à partir du côté de celui-ci ne guidant pas le moyen formant convoyeur (10), sur une zone angulaire correspondant au moins à 180° compte tenu d'un jeu de mouvement ou de réglage prévu pour le moyen formant convoyeur (10), les deux pièces intercalaires partielles (12, 13) étant disposées de façon décalée l'une par rapport à l'autre dans le sens axial (D) du cylindre (3) ou rouleau associé.

8. Dispositif selon l'une des revendications 3 à 7, caractérisé en ce que l'une au moins des pièces intercalaires ou des pièces intercalaires partielles (respectivement 12 et 13), de préférence la pièce intercalaire ou la pièce intercalaire partielle (13) de l'élément porteur (6), situé côté entrée du moyen formant convoyeur, du dispositif de montage prévu pour le cylindre de déviation (3) placé dans la zone coudée ou pour le rouleau de déviation ou cylindre ou rouleau abaisseur proche du cadre porteur, possède, dans sa zone de base proche du moyen formant convoyeur, une rampe de montée (15) inclinée par rapport au plan (10e) du moyen formant convoyeur.

9. Dispositif selon la revendication 8, comportant deux pièces intercalaires partielles coopérant l'une avec l'autre pour des convoyeurs à bande (1) de construction coudée, caractérisé en ce que la rampe de montée (15) s'étend sur une partie au moins de la largeur de la seconde pièce intercalaire (12 ou 13) associée, dans le sens axial (D) du cylindre (3) ou rouleau associé.

10. Dispositif selon la revendication 1 ou 2, caractérisé en ce que la pièce intercalaire (11) possède, côté brin supérieur et/ou côté brin inférieur, une surface (par exemple 11a) parallèle au sens de tension.

11. Dispositif selon l'une des revendications 1, 2 ou 10, caractérisé en ce que la pièce intercalaire (11) possède, côté brin supérieur et/ou côté brin inférieur, une surface (11b) inclinée de façon divergente par rapport à l'axe de rotation (9) du cylindre (3) ou rouleau associé.

12. Dispositif selon l'une des revendications 1, 2 ou 10, caractérisé en ce que la pièce intercalaire (11) possède, côté brin supérieur et/ou côté brin inférieur, une surface inclinée de façon convergente par rapport à l'axe de rotation (9) du cylindre (3) ou rouleau associé.

13. Dispositif selon l'une des revendications 3 à 9, caractérisé en ce que la pièce intercalaire (par exemple 12) ou l'une au moins des pièces intercalaires partielles (12 ou 13) possède, côté brin, une surface (12b ou 13b) parallèle au sens de tension de la zone de moyen formant convoyeur associée (10c ou 10d), en présence d'un angle de coude maximal (αₘₐₓ) des deux zones longitudinales (10c, 10d) du moyen formant convoyeur (10) ou du cadre porteur (2).

14. Dispositif selon l'une des revendications 3 à 9, caractérisé en ce que la pièce intercalaire ou l'une au moins des pièces intercalaires partielles (12 ou 13) possède, côté brin, une surface inclinée de façon divergente par rapport au sens de tension de la zone de moyen formant convoyeur associée (10c ou 10d), en présence d'un angle de coude maximal (αₘₐₓ) des deux zones longitudinales (10c, 10d) du moyen formant convoyeur (10) ou du cadre porteur (2).

15. Dispositif selon l'une des revendications 3 à 9, caractérisé en ce que la pièce intercalaire ou l'une au moins des pièces intercalaires (12 ou 13) possède, côté brin, une surface inclinée de façon convergente par rapport au sens de tension de la zone de moyen formant convoyeur associée (10c ou 10d), en présence d'un angle de coude maximal (αₘₐₓ) des deux zones longitudinales (10c, 10d) du moyen formant convoyeur (10) ou du cadre porteur (2).

16. Dispositif selon l'une des revendications précédentes, caractérisé en ce que la pièce intercalaire (11, 12 ou 13) ou l'une au moins des pièces intercalaires partielles (12, 13) possède, sur sa face proche du cylindre ou du rouleau, un contour (11c, 12c ou 13c) conforme à la surface du cylindre ou du rouleau.

17. Dispositif selon l'une des revendications 1 à 15, caractérisé en ce que la pièce intercalaire (11, 12 ou 13) ou l'une au moins des pièces intercalaires partielles (12, 13) possède, sur sa face proche du cylindre ou du rouleau, un contour (11c, 12c ou 13c) différent de la surface du cylindre ou du rouleau.

18. Dispositif selon la revendication 17, caractérisé en ce que la pièce intercalaire (11, 12 ou 13) ou l'une au moins des pièces intercalaires partielles (12, 13) possède, sur sa face proche du cylindre ou du rouleau, un contour (11c, 12c ou 13c) qui respecte, entre les zones d'extrémité respectivement proches du brin supérieur et du brin inférieur, ou entre les zones d'extrémité respectivement proche du brin et libre, de leur surface proche du cylindre ou du rouleau, un écartement par rapport à la surface du cylindre ou du rouleau qui est supérieur à l'écartement prévu dans ces zones d'extrémité.

19. Dispositif selon la revendication 17 pour un convoyeur à bande (1) de construction coudée, comportant des zones longitudinales du moyen formant convoyeur (10) et du cadre porteur (2) portant celui-ci qui sont réglables suivant un certain angle l'une par rapport à l'autre, et comportant des pièces intercalaires partielles du dispositif de montage associées respectivement à ces zones, caractérisé en ce que les deux pièces intercalaires partielles (12, 13) possèdent, sur leur face proche du cylindre ou du rouleau, un contour (respectivement 12c et 13c) qui respecte un écartement croissant, entre les zones d'extrémité respectivement proche du brin et libre de leur surface proche du cylindre ou du rouleau, par rapport à la surface du cylindre ou du rouleau.

20. Dispositif selon l'une des revendications précédentes, caractérisé en ce que la pièce intercalaire (11, 12 ou 13) ou la pièce intercalaire partielle (12 ou 13) est fixée de façon amovible au niveau de l'élément porteur (4, 5 ou 6) associé du dispositif de montage.

21. Dispositif selon l'une des revendications 1 à 19, caractérisé en ce que la pièce intercalaire (11, 12 ou 13) ou la pièce intercalaire partielle (12 ou 13) est disposée de façon fixe au niveau de l'élément porteur (4, 5 ou 6) associé du dispositif de montage.

22. Dispositif selon la revendication 21, caractérisé en ce que la pièce intercalaire (11, 12 ou 13) ou la pièce intercalaire partielle (12 ou 13) est soudée, par exemple par soudage par points, rivée ou collée à l'élément porteur (4, 5 ou 6) associé du dispositif de montage.

23. Dispositif selon la revendication 21, caractérisé en ce que la pièce intercalaire (11, 12 ou 13) ou la pièce intercalaire partielle (12 ou 13) est rapportée, par exemple par coulage, au niveau de l'élément porteur (4, 5 ou 6) associé du dispositif de montage.

24. Dispositif selon l'une des revendications précédentes, comportant une pièce intercalaire ou une pièce intercalaire partielle du dispositif de montage, placée entre deux brins du moyen formant convoyeur, caractérisé en ce que la pièce intercalaire (11, 12 ou 13) ou la pièce intercalaire partielle (12 ou 13) s'étend au-dessus de l'interstice libre prévu entre les deux éléments porteurs (4, 5 ou 6) du dispositif de montage correspondant l'un à l'autre et disposés sur des côtés différents du cadre porteur.

25. Dispositif selon l'une des revendications précédentes, caractérisé en ce que l'axe (9) ou l'arbre de cylindre ou de rouleau associé à la pièce intercalaire (11, 12 ou 13) ou à la pièce intercalaire partielle (12 ou 13) est maintenu mobile, dans le ou les éléments porteurs (4, 5, 6) associés du dispositif de montage, par rapport à ladite pièce intercalaire (11, 12 ou 13) ou à ladite pièce intercalaire partielle (12 ou 13).

26. Dispositif selon la revendication 25, caractérisé en ce que l'élément porteur (4, 5 ou 6) du dispositif de montage, pourvu de la pièce intercalaire (11, 12 ou 13) ou de la pièce intercalaire partielle (12 ou 13), possède au moins un trou oblong (17) dans lequel l'axe (9) ou l'arbre de cylindre ou de rouleau associé est maintenu mobile à l'aide d'une fixation de palier (18).

27. Dispositif selon la revendication 25 pour un convoyeur à bande (1) de construction coudée, comportant des zones longitudinales du moyen formant convoyeur (10) et du cadre porteur (2) portant celui-ci qui sont réglables suivant un certain angle l'une par rapport à l'autre, et comportant des pièces intercalaires partielles du dispositif de montage associées respectivement à ces zones, caractérisé en ce que les éléments porteurs (5 ou 6) du dispositif de montage pourvus des pièces intercalaires partielles (12 ou 13) possèdent chacun au moins un trou oblong dirigé de préférence dans le sens du brin entrant et/ou dans le sens du brin sortant (respectivement 10c et 10d) du moyen formant convoyeur (10), ledit trou oblong ou l'un au moins des trous oblongs (17) du premier élément porteur (6) couvrant au moins partiellement le trou oblong ou l'un au moins des trous oblongs (17) du second élément porteur (5), et l'axe (9) ou l'arbre de cylindre ou de rouleau associé étant maintenu mobile à l'aide d'une fixation de palier (18) pénétrant conjointement dans les trous oblongs (17) se recouvrant des deux éléments porteurs (5, 6).
